# EUROPÄISCHE PATENTSCHRIFT

(11) **EP 1 102 533 B1**
(45) Veröffentlichungstag und Bekanntmachung des Hinweises auf die Patenterteilung: **26.11.2003**
(21) Anmeldenummer: 99939411.7
(22) Anmeldetag: 28.07.1999
(51) Int. Cl.: A01N 25/26

(54) **BODENGRANULATE MIT KONTROLLIERTER WIRKSTOFFFREISETZUNG (CR-BODENGRANULATE)**
SOIL GRANULATES WITH CONTROLLED ACTIVE INGREDIENT RELEASE (CR SOIL GRANULATES)
GRANULATS POUR LE SOL, A LIBERATION CONTROLEE DE LA MATIERE ACTIVE (CR)

(30) Priorität: 05.08.1998 DE 19835218; 13.10.1998 DE 19846893
(43) Veröffentlichungstag der Anmeldung: 30.05.2001
(73) Patentinhaber: BASF AKTIENGESELLSCHAFT, 67056 Ludwigshafen (DE)
(72) Erfinder: STADLER, Reinhold, D-67489 Kirrweiler (DE); KOBER, Reiner, D-67136 Fu gönheim (DE); SCHNEIDER, Karl-Heinrich, D-67271 Kleinkarlbach (DE); SAUR, Reinhold, D-67459 Böhl-Iggelheim (DE); BAYER, Herbert, D-68159 Mannheim (DE); KOLTER, Karl, D-67117 Limburgerhof (DE); SEUFERT, Michael, D-67098 Bad Dürkheim (DE)
(74) Vertreter: Pohl, Michael, Dr.
(86) Internationale Anmeldenummer: EP9905407
(87) Internationale Veröffentlichungsnummer: WO00007443

(56) Entgegenhaltungen:
- EP-A- 0 868 912
- WO-A-95/16350
- DE-A- 19 640 269

## Beschreibung

Die vorliegende Erfindung betrifft CR-Bodengranulate, erhältlich durch Aufbringung einer wirkstoffhaltigen Hülle auf einen festen Träger in der Wirbelschicht bei einer definiert einstellbaren Wärmezufuhr von 6.000 bis 25.000 kJ/kg Hüllpolymeranteil, CR-Bodengranulate enthaltend eine wirkstoffhaltige Hülle aus 0,1-25 Gew.-% eines oder mehrerer Wirkstoffe, 1-40 Gew.-% eines oder mehrerer Hüllpolymere, 0-60 Gew.-% eines oder mehrerer Additive, ein Verfahren zur Herstellung dieser Bodengranulate, sowie ein Verfahren zur Bekämpfung von phytopathogenen Pilzen, unerwünschtem Pflanzenwuchs, unerwünschtem Insektenbefall und/oder zur Regulation des Wachstums von Pflanzen unter Verwendung der erfindungsgemäßen CR-Bodengranulate.

Es ist allgemein bekannt, Pflanzenschutz-Wirkstoffe mit Hüllpolymeren so auf einem festen Träger zu fixieren, daß der Wirkstoff nur allmählich freigesetzt wird und somit über einen langen Zeitraum seine Wirkung entfalten kann (sog. "slow-release-Formulierung"). WO-A 92 17424 beschreibt mit einem ionisch und kovalent vernetzten Copolymer aus Ethylen und dem Zinksalz von Methacrylsäure umhüllte Düngerkörner. EP-A 0 380 836 offenbart die nicht kovalent vernetzten teilweise neutralisierten Äquivalente zu den in WO-A-9217424 beschriebenen Copolymeren als geeignet zur Umhüllung von landwirtschaftlichen Chemikalien, die langsam und kontrolliert freigesetzt werden sollen. In US-A 4,756,844 wird ein Verfahren zur Umhüllung kleiner Körner, die einen Wirkstoff enthalten, der ein Pflanzenschutzmittel sein kann, beschrieben. Die gängigen Produkte haben jedoch den Nachteil, daß sie noch stark zum Verkleben neigen, wodurch die formulierte Ware ihre Fließfähigkeit verliert und daß die Freisetzungsrate des Wirkstoffs nicht durch die Prozessführung eingestellt werden kann.

Die WO-A-95/16350 beschreibt Mittel, die einen oder mehrere Pflanzenschutz-Wirkstoffe in einer Formulierung auf einem Träger enthalten und die in Form eines Granulats oder als Pellets vorliegen.

Die EP-A-0 868 912 beschreibt die Verwendung von redispergierbaren Polymerpulvern oder Polymergranulaten zum Überziehen von pharmazeutischen oder agrochemischen Darreichungsformen, wobei das Überzugsmaterial 10 bis 95 Gew.-% Polyvinylacetat, 5 bis 90 Gew.-% eines N-Vinylpyrrolidon-haltigen Polymers, 0 bis 20 Gew.-% eines weiteren wasserlöslichen oder - quellbaren Stoffs und 0 bis 20 Gew.-% eines wasserlöslichen Puderungsmittels enthält.

Der vorliegenden Erfindung lag daher die Aufgabe zugrunde, eine Formulierung für Pflanzenschutzwirkstoffe zu finden, welche die zuvor beschriebenen nachteiligen Eigenschaften nicht aufweist.

Weitere Aufgabe der Erfindung war es, slow release Formulierungen zu entwickeln, die den Einsatz phytotoxischer Wirkstoffe zur Behandlung von Pflanzenkrankheiten ermöglicht.

Eine weitere Aufgabenstellung galt der Entwicklung neuer Coating-Techniken unter Verwendung spezieller und neuer Hüllpolymere, die den verkapselten Wirkstoff maßgeschneidert, mit kontrollierter Freisetzungsrate, systemisch und transapikal über eine große Vegetationsperiode der Pflanze als Beidrillgranulat zur Verfügung stellen.

Erfindungsgemäß wir die Aufgabe gelöst durch CR-Bodengranulate, erhältlich durch Aufbringung einer wirkstoffhaltigen Hülle auf einen festen Träger in der Wirbelschicht bei einer definiert einstellbaren Wärmezufuhr von 6.000 bis 25.000 kJ/kg Hüllpolymeranteil, wobei die Hülle wenigstens ein unter Butylacrylat-Styrol-Copolymeren, Copolymerdispersionen aus Acrylund Methacrylsäureester, Polyethylenwachsemulsionen, aus Einheiten von 50 mol-% Dimethylterephtalat + ca. 50 mol-% Adipinsäure + 150 mol-% 1,4-Butandiol aufgebauten Polyestern und Ethylenmethacrylsäure-Zinksalz ausgewähltes Hüllpolymer enthält.

Ferner wurde ein Verfahren zur Herstellung der CR-Bodengranulate und die Verwendung jener Mittel, welche einen fungiziden Pflanzenschutz-Wirkstoff enthalten, zur Bekämpfung von Schadpilzen gefunden.

Ein weiterer Gegenstand der Erfindung ist daher ein Verfahren zur Herstellung der CR-Bodengranulate, das dadurch gekennzeichnet ist, dass auf einen Träger zunächst der Wirkstoff und anschließend die Hülle enthaltend mindestens ein Hüllpolymer und ggf. Additive in einer Wirbelschicht bei einer Wärmezufuhr von 6.000 bis 25.000 kJ/kg Hüllpolymeranteil aufgebracht werden, wobei in der Hülle durch Abrieb oder gezielte Zugabe von wasserlöslichen Additiven Mikroporen erzeugt werden.

Ein weiterer Gegenstand der Erfindung ist die Verwendung der CR-Bodengranulate zur Bekämpfung von phytopathogenen Pilzen, unerwünschtem Pflanzenwuchs, unerwünschtem Insektenbefall und/oder zur Regulation des Wachstums von Pflanzen.

Durch den Aufbau ein- oder mehrlagiger semipermeabler Hüllen auf dem CR-Bodengranulat und durch genaue Dosierung der zugeführten Wärmemenge in einer Wirbelschichtanlage wird eine Wirkstoffverfügbarkeit bis zu einem Zeitraum von mehr als 9 Monaten erreicht.

Bevorzugte erfindungsgemäße CR-Bodengranulate dienen dem Ziel, einen Komplettschutz gegen pilzliche pathogene zu bieten, nicht phytotoxisch zu sein und im Endeffekt fungizide Spritzbehandlungen zu ersetzen, wenn sie mit der Saat der einjährigen oder mehrjährigen Pflanze im Beidrillverfahren ausgebracht werden.

Als Pflanzenschutz-Wirkstoffe kommen herbizide, wachstumsregulatorische, insektizide und insbesondere fungizide Wirkstoffe in Betracht.

Geeignete systemische Wirkstoffe stehen aus den fungiziden Stoffklassen der Azole, Morpholine, Valinamide, Strobilurine und Salicylate als entfernte Abkömmlinge von Wirksubstanzen des Bion®-Typs zur Verfügung. In ausgewählten Versuchen wurden überraschenderweise bei Anwendung in Form der erfindungsgemäßen CR-Bodengranulate ähnlich gute oder teilweise sogar bessere biologische Ergebnisse erzielt wie mit einer zweimaligen Spritzbehandlung mit kommerziell erhältlichen Fungiziden.

So zeigten sich auch bei Verwendung von Acetylsalizylsäure als Wirkstoffkomponente überraschenderweise wirkungssteigernde Effekte in der Bodenapplikation und Kombination mit Strobilurinen.

Die folgende Liste von Herbiziden zeigt beispielhaft mögliche Wirkstoffe auf:
- b1: 1,3,4-Thiadiazole:
buthidazole, cyprazole
- b2: Amide:
allidochlor (CDAA), benzoylprop-ethyl, bromobutide, chlorthiamid, dimepiperate, dimethenamid, s-dimethenamid, diphenamid, etobenzanid (benzchlomet), flamprop-methyl, fluthiamide, fosamin, isoxaben, monalide, naptalame, pronamid (propyzamid), propanil
- b3: Aminophosphorsäuren:
bilanafos, (bialaphos), buminafos, glufosinate-ammonium, glyphosate, sulfosate
- b4: Aminotriazole:
amitrol
- b5: Anilide:
anilofos, mefenacet
- b6: Aryloxyalkansäuren:
2,4-D, 2,4-DB, clomeprop, dichlorprop, dichlorprop-p, dichlorprop-p (2,4-DP-P), fenoprop (2,4,5-TP), fluoroxypyr, MCPA, MCPB, mecoprop, mecoprop-P, napropamide, napropanilide, triclopyr
- b7: Benzoesäuren:
chloramben, dicamba
- b8: Benzothiadiazinone:
bentazon
- b9: Bleacher:
clomazone (dimethazone), difluf enican, f luorochloridone, flupoxam, fluridone, pyrazolate, sulcotrione (chlormesulone), isoxaflutole, isoxaehlortole, mesotrione
- b10: Carbamate:
asulam, barban, butylate, carbetamid, chlorbufam, chlorpropham, cycloate, desmedipham, diallate, EPTC, esprocarb, molinate, orbencarb, pebulate, phenisopham, phenmedipham, propham, prosulfocarb, pyributicarb, sulfallate (CDEC), terbucarb, thiobencarb (benthiocarb), tiocarbazil, triallate, vernolate
- b11: Chinolinsäuren:
quinclorac, quinmerac
- b12: Chloracetanilide:
acetochlor, alachlor, butachlor, butenachlor, diethatyl ethyl, dimethachlor, metazachlor, metolachlor, pretilachlor, propachlor, prynachlor, terbuchlor, thenylchlor, xylachlor, s-metolachlor
- b13: Cyclohexenone:
alloxydim, tepraloxydim, clethodim, cloproxydim, cycloxydim, sethoxydim, tralkoxydim, 2-{1-[2-(4-Chlorphenoxy)propyloxyimino]butyl}-3-hydroxy-5-(2H-tetrahydrothiopyran-3-yl)-2-cyclohexen-1-on, butroxydim, clefoxydim
- b14: Dichlorpropionsäuren:
dalapon
- b15: Dihydrobenzofurane:
ethofumesate
- b16: Dihydrofuran-3-one:
flurtamone
- b17: Dinitroaniline:
benefin, butralin, dinitramin, ethalfluralin, fluchloralin, isopropalin, nitralin, oryzalin, pendimethalin, prodiamine, profluralin, trifluralin
- b18: Dinitrophenole:
bromofenoxim, dinoseb, dinoseb-acetat, dinoterb, DNOC
- b19: Diphenylether:
acifluorfen-sodium, aclonifen, bifenox, chlornitrofen (CNP), dif enoxuron, ethoxyfen, fluorodifen, fluoroglycofen-ethyl, fomesafen, furyloxyfen, lactofen, nitrofen, nitrofluorfen, oxyfluorfen
- b20: Dipyridylene:
cyperquat, difenzoquat-methylsulfat, diquat, paraquat dichlorid
- b21: Harnstoffe:
benzthiazuron, buturon, chlorbromuron, chloroxuron, chlortoluron, cumyluron, dibenzyluron, cycluron, dimefuron, diuron, dymron, ethidimuron, f enuron, fluormeturon, isoproturon, isouron, karbutilat, linuron, methabenzthiazuron, metobenzuron, metoxuron, monolinuron, monuron, neburon, siduron, tebuthiuron, trimeturon
- b22: Imidazole:
isocarbamid
- b23: Imidazolinone:
imazamethapyr, imazapyr, imazaquin, imazethabenz-methyl (imazame), imazethapyr, imazapic
- b24: Oxadiazole:
methazole, oxadiargyl, oxadiazon
- b25: Oxirane:
tridiphane
- b26: Phenole:
bromoxynil, ioxynil
- b27: Phenoxyphenoxypropionsäureester:
clodinafop, cloquintocet, cyhalofop-butyl, diclofop-methyl, fenoxaprop-ethyl, fenoxaprop-p-ethyl, fenthiapropethyl, fluazifop-butyl, fluazifop-p-butyl, haloxyfop-ethoxyethyl, haloxyfop-methyl, haloxyfop-p-methyl, isoxapyrifop, propaquizafop, quizalofop-ethyl, quizalofop-p-ethyl, quizalofop-tefuryl
- b28: Phenylessigsäuren:
chlorf enac (fenac)
- b29: Phenylpropionsäuren:
chlorophenprop-methyl
- b30: Protoporphyrinogen-IX-Oxydase-Hemmer:
benzofenap, cinidon-ethyl, flumiclorac-pentyl, flumioxazin, flumipropyn, flupropacil, fluthiacet-methyl, pyrazoxyfen, sulfentrazone, thidiazimin, carfentrazone
- b31: Pyrazole:
nipyraclofen, pyraflufen-ethyl
- b32: Pyridazine:
chloridazon, Maleinsäurehydrazid, norflurazon, pyridate
- b33: Pyridincarbonsäuren:
clopyralid, dithiopyr, picloram, thiazopyr, diflufenzopyr
- b34: Pyrimidylether:
pyrithiobac-säure, pyrithiobac-sodium, KIH-2023, KIH-6127, pyribenzoxym
- b35: Sulfonamide:
flumetsulam, metosulam
- b36: Sulfonylharnstoffe:
amidosulfuron, azimsulfuron, bensulfuron-methyl, chlorimuronethyl, chlorsulfuron, cinosulfuron, cyclosulfamuron, ethametsulfuron methyl, ethoxysulfuron, flazasulfuron, halosulfuronmethyl, imazosulfuron, metsulfuron-methyl, nicosulfuron, primisulfuron, prosulfuron, pyrazosulfuron-ethyl, rimsulfuron, sulfometuron-methyl, thifensulfuron-methyl, triasulfuron, tribenuron-methyl, triflusulfuron-methyl, N-[[[4-methoxy-6-(trifluoromethyl)-1,3,5-triazin-2-yl]amino]carbonyl]-2-(trifluoromethyl)-Benzenesulfonamide, sulfosulfuron, idosulfuron
- b37: Triazine:
ametryn, atrazin, aziprotryn, cyanazine, cyprazine, desmetryn, dimethamethryn, dipropetryn, eglinazin-ethyl, hexazinon, procyazine, prometon, prometryn, propazin, secbumeton, simazin, simetryn, terbumeton, terbutryn, terbutylazin, trietazin
- b38: Triazinone:
ethiozin, metamitron, metribuzin
- b39: Triazolcarboxamide:
triazofenamid
- b40: Uracile:
bromacil, lenacil, terbacil
- b41: Verschiedene:
benazolin, benfuresate, bensulide, benzofluor, butamifos, cafenstrole, chlorthal-dimethyl (DCPA), cinmethylin, dichlobenil, endothall, fluorbentranil, mefluidide, perfluidone, piperophos, flucabazone, oxaciclomefone (MY 100)

Die folgende Liste von Verbindungen mit wachstumsregulatorischer Wirkung zeigt beispielhaft mögliche Wirkstoffe aus dieser Gruppe auf :
1-Naphthylacetamid, 1-Naphthylessigsäure, 2-Naphthyloxyessigsäure, 3-CPA, 4-CPA, Ancymidol, Anthrachinon, BAP, Butifos; Tribufos, Butralin, Chlorflurenol, Chlormequat, Clof encet, Cyclanilide, Daminozide, Dicamba, Dikegulac sodium, Dimethipin, Chlorfenethol, Etacelasil, Ethephon, Ethychlozate, Fenoprop, 2,4,5-TP, Fluoridamid, Flurprimidol, Flutriafol, Gibberellic acid, Gibberillin, Guazatin, Imazalil, Indolylbuttersäure, Indolylessigsäure, Karetazan, Kinetin, Lactidichlor-ethyl, Maleic hydrazide, Mefluidide, Mepiquat-chlorid, Naptalam, Paclobutrazole, Prohexadione calcium, Quinmerac, Sintofen, Tetcyclacis, Thidiazuron, Triiodobezoicacid, Triapenthenol, Triazethan, Tribufos, Trinexapacethyl,Uniconazole.

Die folgende Liste von Insektiziden zeigt beispielhaft mögliche Wirkstoffe auf:
Neonicotinoide/Chlornicotinyl-Verbindungen:
Imidacloprid, Acetamiprid, Nitenpyram, Thiacloprid, Thiamethoxam, Tefuranitdine, Organophosphate,
Acephate, Azinphos-methyl, Chlorpyrifos, Dimethoate, Disulfoton Fosthiazate, Methamidophos, Methidathion, Methyl-Parathion, Oxydemeton-methyl, Phorate, Phosalone,
Phosmet, Profenofos, Trichlorfon
Carbamate, wie
Alanycarb, Aldicarb, Benfuracarb, Carbofuran, Carbosulfan, Furathiocarb, Methomyl, Oxamyl, Pirimicarb, Thiodicarb
Pyrethroide, wie
Bifenthrin, Cyfluthrin, Cypermethrin, Deltamethrin, Esfenvalerate,
Fenpropathrin, Lambda-Cyhalothrin, Permethrin, Tau-Fluvalinate, Tralomethrin, Zeta-Cypermethrin
Harnstoffderivate, wie
Diflubenzuron, Flucycloxuron, Flufenoxuron, Hexaflumuron, Lufenuron,
Novaluron, Triflumuron
Juvenoide, wie
Buprofezin, Diofenolan,Fenoxycarb, Pyriproxifen, Methoxyfenozide, Tebufenozide
Verschiedene, wie
Abamectin, Spinosad, Amitraz, Cartap, Chlorfenapyr, Diafenthiuron, Fipronil
Pyridaben, Tebufenpyrad, Fenazaquin, Fenpyroxymate, Thiocyclam, Silafluofen

Die folgende Liste von Fungiziden zeigt beispielhaft mögliche wirkstoffe auf:
Schwefel, Dithiocarbamate und deren Derivate, wie Ferridimethyldithiocarbamat, Zinkdimethyldithiocarbamat, Zinkethylenbisdithiocarbamat, Manganethylenbisdithiocarbamat, Mangan-Zink-ethylendiamin-bis-dithiocarbamat, Tetramethylthiuramdisulfide, Ammoniak-Komplex von Zink-(N,N-ethylen-bis-dithiocarbamat), Ammoniak-Komplex von Zink-(N,N'-propylen-bis-dithiocarbamat), Zink-(N,N'-propylenbis-dithiocarbamat), N,N'-Polypropylen-bis-(thiocarbamoyl)disulfid;
Nitroderivate, wie Dinitro-(1-methylheptyl)-phenylcrotonat, 2-sec-Butyl-4,6-dinitrophenyl-3,3-dimethylacrylat, 2-sec-Butyl-4,6-dinitrophenyl-isopropylcarbonat, 5-Nitro-isophthalsäuredi-isopropylester;
heterocyclische Substanzen, wie 2-Heptadecyl-2-imidazolin-acetat, 2,4-Dichlor-6-(o-chloranilino)-s-triazin, O,O-Diethyl-phthalimidophosphonothioat, 5-Amino-1-[bis-(dimethylamino)-phosphinyl]-3-phenyl-1,2,4- triazol, 2,3-Dicyano-1,4-dithioanthrachinon, 2-Thio-1,3-dithiolo[4,5-b]chinoxalin, 1-(Butylcarbamoyl)-2-benzimidazol-carbaminsäuremethylester, 2-Methoxycarbonylamino-benzimidazol, 2-(Furyl-(2))-benzimidazol, 2-(Thiazolyl-(4))-benzimidazol, N-(1,1,2,2-Tetrachlorethylthio)-tetrahydrophthalimid, N-Trichlormethylthio-tetrahydrophthalimid, N-Trichlormethylthio-phthalimid, N-Dichlorfluormethylthio-N',N'-dimethyl-N-phenyl-schwefelsäurediamid, 5-Ethoxy-3-trichlormethyl-1,2,3-thiadiazol, 2-Rhodanmethylthiobenzthiazol, 1,4-Dichlor-2,5-dimethoxybenzol, 4-(2-Chlorphenylhydrazono)-3-methyl-5-isoxazolon, Pyridin-2-thio-1-oxid, 8-Hydroxychinolin bzw. dessen Kupfersalz, 2,3-Dihydro-5-carboxanilido-6-methyl-1,4-oxathiin, 2,3-Dihydro-5-carboxanilido-6-methyl-1,4-oxathiin-4,4-dioxid, 2-Methyl-5,6-dihydro-4H-pyran-3-carbonsäure-anilid, 2-Methyl-furan-3-carbonsäureanilid, 2,5-Dimethyl-furan-3-carbonsäureanilid, 2,4,5-Trimethyl-furan-3-carbonsäureanilid, 2,5-Dimethyl-furan-3-carbonsäurecyclohexylamid, N-Cyclohexyl-N-methoxy-2,5-dimethyl-furan-3-carbonsäureamid, 2-Methyl-benzoesäure-anilid, 2-Iod-benzoesäure-anilid, N-Formyl-N-morpholin-2,2,2-trichlorethylacetal, Piperazin-1,4-diylbis-1- (2,2,2-trichlorethyl)-formamid, 1-(3,4-Dichloranilino)-1- formylamino-2,2,2-trichlorethan, 2,6-Dimethyl-N-tridecyl-morpholin bzw. dessen Salze, 2,6-Dimethyl-N-cyclododecyl-morpholin bzw. dessen Salze, N-[3-(p-tert.-Butylphenyl)-2-methylpropyl]-cis-2,6-dimethyl-morpholin, N-[3-(p-tert.-Butylphenyl)-2-methylpropyl]-piperidin, 1-[2-(2,4-Dichlorphenyl)-4-ethyl-1,3-dioxolan-2-yl-ethyl]-1H-1,2,4-triazol, 1-[2-(2,4-Dichlorphenyl)-4-n-propyl-1,3-dioxolan-2-ylethyl]-1H-1,2,4-triazol, N-(n-Propyl)-N-(2,4,6-trichlorphenoxyethyl)-N'-imidazol-yl-harnstoff, 1-(4-Chlorphenoxy)-3,3-dimethyl-1-(1H-1,2,4-triazol-1-yl)-2-butanon, 1-(4-Chlorphenoxy)-3,3-dimethyl-1-(1H-1,2,4-triazol-1-yl)-2-butanol, (2RS,3RS)-1-[3-(2-Chlorphenyl)-2-(4-fluorphenyl)-oxiran-2-ylmethyl]-1H-1,2,4-triazol, a-(2-Chlorphenyl)-a-(4-chlorphenyl)-5-pyrimidin-methanol, 5-Butyl-2-dimethylamino-4-hydroxy-6-methyl-pyrimidin, Bis-(p-chlorphenyl)-3-pyridinmethanol, 1,2-Bis-(3-ethoxycarbonyl-2-thioureido)-benzol, 1,2-Bis-(3-methoxycarbonyl-2-thioureido)-benzol,
Anilinopyrimidine, wie N-(4,6-Dimethylpyrimidin-2-yl)-anilin, N-[4-Methyl-6-(1-propinyl)-pyrimidin-2-yl]-anilin, N-[4-Methyl-6-cyclopropyl-pyrimidin-2-yl]-anilin,
Phenylpyrrole, wie 4-(2,2-Difluor-1,3-benzodioxol-4-yl)-pyrrol-3-carbonitril,
Zimtsäureamide, wie 3-(4-Chlorphenyl)-3-(3,4-dimethoxyphenyl)-acrylsäuremorpholid,
sowie verschiedene Fungizide, wie Dodecylguanidinacetat, 3-[3-(3,5-Dimethyl-2-oxycyclohexyl)-2-hydroxyethyl]-glutarimid, Hexachlorbenzol, DL-Methyl-N-(2,6-dimethyl-phenyl)-N-furoyl-(2)-alaninat, DL-N-(2,6-Dimethyl-phenyl)-N-(2'-methoxyacetyl)-alanin-methyl- ester, N-(2,6-Dimethylphenyl)-N-chloracetyl-D,L-2-aminobutyrolacton, DL-N-(2,6-Dimethylphenyl)-N-(phenylacetyl)-alaninmethylester, 5-Methyl-5-vinyl-3-(3,5-dichlorphenyl)-2,4-dioxo-1,3-oxazolidin, 3-[3,5-Dichlorphenyl(-5-methyl-5-methoxymethyl]-1,3-oxazolidin- 2,4-dion, 3-(3,5-Dichlorphenyl)-1-isopropylcarbamoylhydantoin, N-(3,5-Dichlorphenyl)-1,2-dimethylcyclopropan-1,2-dicarbonsäureimid, 2-Cyano-[N-(ethylaminocarbonyl)-2-methoximino]-acetamid, 1-[2-(2,4-Dichlorphenyl)-pentyl]-1H-1,2,4-triazol, 2,4-Difluor-a-(1H-1,2,4-triazolyl-1-methyl)-benzhydrylalkohol, N-(3-Chlor-2,6-dinitro-4-trifluormethyl-phenyl)-5-trifluormethyl-3-chlor-2-aminopyridin, 1-((bis-(4-Fluorphenyl)-methylsilyl)-methyl)-1H-1,2,4-triazol, 2-(4-Chlorphenyl)-3-Cyclopropyl-1-(1H-1,2,4-triazol-1-yl)-butan-2-ol, 3-Chlor-4-[4-metyl-2-(1H-1,2,4-triazol-1-ylmethyl)-1,3-dioxolan-2-yl]phenyl-4-chlorphenylether, 1,3-Dimethyl-5-chlor-pyrazol-4carbonsäure-[2,3-(2,4,4-trimethyltetrahydrofuran)-anilid], 2-Methyl-4-trifluormethyl-thizol-5-carbonsäure-(2,6-dibrom-4-trofluormethoxy-anilid), 2-Chlornicotinsäure-[2-(4'-chlorphenyl)anilid, N-[(R)-1-(2,4-dichlorphenyl)-ethyl]-(S)-2-cyano-3,3-dimethylbutanamid, N-[(R)-1-(4-chlorphenyl)-ethyl]-(S)-2,2-cyclopropyl-2',2-dichlor-3'-methyl-butanamid, 3-Allyloxy-1,2-benzisothiazol-1,1-dioxid, 2,3-Benzisothiadiazol-1-carbonsäurethiolester, 1,2,5,6-Tetrahydro-pyrrolo-[3,2,1-i,j]-chinolin-4-on, 5-Methyl-1,2,4-triazolo[3,4-b]benzothiazol, di-idopropyl-1,3-dithiolan-2-yliden-malonat, 4-(2,2-Difluor-1,3-benzodioxol-4-yl)-pyrrol-3-carbonitril, N-(i-Propoxycarbonyl)-L-valin-(R)-1-(2-napthyl)-ethylamid, N-(i-Propoxycarbonyl)-L-valin-(R,S)-1-(4-methylphenyl)-ethylamid,
Strobilurine, wie Methyl-E-methoxyimino-[α-(o-tolyloxy)-o-tolyl]acetat, Methyl-E-2-{2-[6-(2-cyanophenoxy)-pyrimidin-4-yloxy]-phenyl}-3-methoxyacrylat, Methyl-E-methoxyimino-[α-(2-phenoxyphenyl)]-acetamid, Methyl-E-methoxyimino-[α-(2,5-dimethylphenoxy)-o-tolyl]-acetamid.

Aus der Klasse der Strobilurine sind bevorzugt fungizid wirksame Verbindungen der Formel I zu nennen. 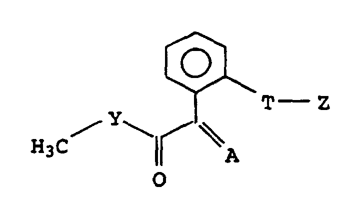 in der die Substituenten die folgende Bedeutung haben:
- A: NOCH₃, CHOCH₃, CHCH₃;
- Y: O, NH;
- T: Sauerstoff oder Oxymethylen
- Z: eine Gruppe X, N=C(R¹)W oder N=C(R¹)-C(R²)=NOR³
- X: ggf. subst. Heterocyclyl, ggf. subst. Aryl, ggf. subst. Hetaryl;
- W: ggf. subst. Alkyl, ggf. subst. Alkenyl, ggf. subst. Alkinyl, ggf. subst. Cycloalkyl, ggf. subst. Cycloalkenyl, ggf. subst. Heterocyclyl, ggf. subst. Aryl oder ggf. subst. Hetaryl;
- R¹: Wasserstoff, Cyano, C₁-C₄-Alkyl, C₁-C₄-Halogenalkyl, C₁-C₄-Alkoxy, C₁-C₄-Alkoxy-C₁-C₄-alkyl, C₃-C₆-Cycloalkyl;
- R²: Wasserstoff, Cyano, Halogen, C(R^{d})=NOR³ oder W, OW, SW oder NR^{c}W, wobei
- R^{c}: Wasserstoff, Alkyl, Alkenyl oder Alkinyl;
- R^{d}: Wasserstoff oder Alkyl;
- R³: Wasserstoff, ggf. subst. Alkyl, ggf. subst. Alkenyl oder ggf. subst. Alkinyl bedeuten.
wobei
- X: Heterocyclyl, welches vollständig oder partiell halogeniert sein und/oder 1 bis 3 der folgenden Reste tragen kann:
Cyano, C₁-C₄-Alkyl, C₁-C₄-Halogenalkyl oder C₁-C₄-Alkoxy; Aryl, Hetaryl, wobei die cyclischen Reste partiell oder vollständig halogeniert sein und/oder eine bis drei der folgenden Gruppen tragen können:
   Cyano, Nitro, Hydroxy, Mercapto, Amino, Carboxyl, Aminocarbonyl, Aminothiocarbonyl, C₁-C₆-Alkyl, C₁-C₆-Halogenalkyl, C₁-C₆-Alkylcarbonyl, C₁-C₆-Alkylsulfonyl, C₁-C₆-Alkylsulfoxyl, C₃-C₆-Cycloalkyl, C₁-C₆-Alkoxy, C₁-C₆-Halogenalkoxy, C₁-C₆-Alkoxycarbonyl, C₁-C₆-Alkylthio, C₁-C₆-Alkylamino, Di-C₁-C₆-alkylamino, C₁-C₆-Alkylaminocarbonyl, Di-C₁-C₆-alkylaminocarbonyl, C₁-C₆-Alkylaminothiocarbonyl, Di-C₁-C₆-alkylaminothiocarbonyl, C₂-C₆-Alkenyl, C₂-C₆-Alkenyloxy, Benzyl, Benzyloxy, Aryl, Aryloxy, Arylthio, Heteroaryl, Heteroaryloxy, Heteroarylthio, C₃-C₆-Alkinyloxy, C₁-C₄-Alkylendioxy, welches halogeniert sein kann, oder C(=NOR^{d})-Γₗ-R^{d'}, wobei
      R^{d} für Wasserstoff oder C₁-C₆-Alkyl;
      Γ für Sauerstoff, Schwefel oder NR^{d} steht;
      l gleich 0 oder 1 ist und
   die cyclischen Gruppen ihrerseits partiell oder vollständig halogeniert sein und/oder 1 bis 3 der folgenden Substituenten tragen können: Cyano, Nitro, Hydroxy, C₁-C₆-Alkyl, C₁-C₆-Halogenalkyl, C₁-C₆-Alkylcarbonyl, C₃-C₆-Cycloalkyl, C₁-C₆-Alkoxy, C₁-C₆-Halogenalkoxy, C₁-C₆-Alkoxycarbonyl, C₁-C₆-Alkylthio, C₁-C₆-Alkylamino, Di-C₁-C₆-alkylamino, C₂-C₆-Alkenyl, C₂-C₆-Alkenyloxy, C₃-C₆-Alkinyloxy und C₁-C₄-Alkylendioxy, welches halogeniert sein kann, steht,
- W: für C₁-C₆-Alkyl, C₂-C₆-Alkenyl oder C₂-C₆-Alkinyl,
wobei diese Gruppen vollständig oder partiell halogeniert sein und/oder 1 bis 3 der folgenden Reste tragen können:
Cyano, C₁-C₆-Alkoxy, C₁-C₆-Halogenalkoxy, C₁-C₆-Alkoxycarbonyl, C₃-C₆-Cycloalkyl, Heterocyclyl, Aryl oder Hetaryl, wobei
die cyclischen Gruppen ihrerseits partiell oder vollständig halogeniert sein und/oder 1 bis 3 der folgenden Reste tragen können:
   Cyano, Nitro, C₁-C₄-Alkyl, C₁-C₄-Halogenalkyl, C₁-C₄-Alkoxy, C₁-C₄-Halogenalkoxy; oder
für C₃-C₆-Cycloalkyl, C₃-C₆-Cycloalkenyl oder Heterocyclyl,
wobei diese Gruppen vollständig oder partiell halogeniert sein und/oder 1 bis 3 der folgenden Reste tragen können:
Cyano, C₁-C₄-Alkyl, C₁-C₄-Halogenalkyl oder C₁-C₄-Alkoxy; oder
für Aryl oder Heteroaryl,
wobei diese Reste partiell oder vollständig halogeniert sein und/oder eine bis drei der folgenden Gruppen tragen können:
Cyano, Nitro, Hydroxy, Mercapto, Amino, Carboxyl, Aminocarbonyl, Aminothiocarbonyl, C₁-C₆-Alkyl, C₁-C₆-Halogenalkyl, C₁-C₆-Alkylcarbonyl, C₁-C₆-Alkylsulfonyl, C₁-C₆-Alkylsulfoxyl, C₃-C₆-Cycloalkyl, C₁-C₆-Alkoxy, C₁-C₆-Halogenalkoxy, C₁-C₆-Alkoxycarbonyl, C₁-C₆-Alkylthio, C₁-C₆-Alkylamino, Di-C₁-C₆-alkylamino, C₁-C₆-Alkylaminocarbonyl, Di-C₁-C₆-alkylaminocarbonyl, C₁-C₆-Alkylaminothiocarbonyl, Di-C₁-C₆-alkylaminothiocarbonyl, C₂-C₆-Alkenyl, C₂-C₆-Alkenyloxy, Benzyl, Benzyloxy, Aryl, Aryloxy, Arylthio, Heteroaryl, Heteroaryloxy, Heteroarylthio, C₃-C₆-Alkinyloxy, C₁-C₄-Alkylendioxy, welches halogeniert sein kann, oder C(=NOR^{d})-Γₗ-R^{d'}, wobei
   R^{d} für Wasserstoff oder C₁-C₆-Alkyl;
   Γ für Sauerstoff, Schwefel oder NR^{d} steht;
   l gleich 0 oder 1 ist und
die cyclischen Gruppen ihrerseits partiell oder vollständig halogeniert sein und/oder 1 bis 3 der folgenden Substituenten tragen können:
   Cyano, Nitro, Hydroxy, C₁-C₆-Alkyl, C₁-C₆-Halogenalkyl, C₁-C₆-Alkylcarbonyl, C₃-C₆-Cycloalkyl, C₁-C₆-Alkoxy, C₁-C₆-Halogenalkoxy, C₁-C₆-Alkoxycarbonyl, C₁-C₆-Alkylthio, C₁-C₆-Alkylamino, Di-C₁-C₆-alkylamino, C₂-C₆-Alkenyl, C₂-C₆-Alkenyloxy, C₃-C₆-Alkinyloxy und C₁-C₄-Alkylendioxy, welches halogeniert sein kann, steht;
- R²: Wasserstoff, Cyano, Halogen, C(R^{d})=NOR³ oder W, OW, SW oder NR^{c}W, wobei
R^{c} Wasserstoff, C₁-C₆-Alkyl, C₂-C₆-Alkenyl oder C₂-C₆-Alkinyl;
R^{d} Wasserstoff oder C₁-C₄-Alkyl; und
- R³: Wasserstoff, C₁-C₆-Alkyl, C₁-C₆-Cyanoalkyl, C₂-C₆-Alkenyl, C₂-C₆-Alkinyl, C₁-C₄-Alkoxy-C₁-C₆-alkyl oder C₃-C₆-Cycloalkyl-C₁-C₄-alkyl, wobei
diese Gruppen partiell oder vollständig halogeniert sein können und die Cycloalkylgruppen zusätzlich 1 bis 3 C₁-C₄-Alkylreste tragen können; bedeuten.
sowie deren Salze.

Sammelbegriffe stehen dabei für folgende Substituenten:
**Halogen:** Fluor, Chlor, Brom und Jod;
**Alkyl:** gesättigte, geradkettige oder verzweigte Kohlenwasserstoffreste mit 1 bis 4, 6 oder 10 Kohlenstoffatomen, z.B. C₁-C₆-Alkyl wie Methyl, Ethyl, Propyl, 1-Methylethyl, Butyl, 1-Methyl-propyl, 2-Methylpropyl, 1,1-Dimethylethyl, Pentyl, 1-Methylbutyl, 2-Methylbutyl, 3-Methylbutyl, 2,2-Di-methylpropyl, 1-Ethylpropyl, Hexyl, 1,1-Dimethylpropyl, 1,2-Dimethylpropyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl und 1-Ethyl-2-methylpropyl;
**Halogenalkyl:** geradkettige oder verzweigte Alkylgruppen mit 1 bis 10 Kohlenstoffatomen (wie vorstehend genannt), wobei in diesen Gruppen teilweise oder vollständig die Wasserstoffatome durch Halogenatome wie vorstehend genannt ersetzt sein können, z.B. C₁-C₂-Halogenalkyl wie Chlormethyl, Brommethyl, Dichlormethyl, Trichlormethyl, Fluormethyl, Difluormethyl, Trifluormethyl, Chlorfluormethyl, Dichlorfluormethyl, Chlordifluormethyl, 1-Chlorethyl, 1-Bromethyl, 1-Fluorethyl, 2-Fluorethyl, 2,2-Difluorethyl, 2,2,2-Trifluorethyl, 2-Chlor-2-fluorethyl, 2-Chlor-2,2-difluorethyl, 2,2-Dichlor-2-fluorethyl, 2,2,2-Trichlorethyl und Pentafluorethyl;
**Alkoxy:** geradkettige oder verzweigte Alkylgruppen mit 1 bis 10 Kohlenstoffatomen (wie vorstehend genannt), welche über ein Sauerstoffatom (-O-) an das Gerüst gebunden sind;
**Halogenalkoxy:** geradkettige oder verzweigte Halogenalkylgruppen mit 1 bis 10 Kohlenstoffatomen (wie vorstehend genannt), welche über ein Sauerstoffatom (-O-) an das Gerüst gebunden sind;
**Alkylthio:** geradkettige oder verzweigte Alkylgruppen mit 1 bis 10 oder 1 bis 4 Kohlenstoffatomen (wie vorstehend genannt), welche über ein Schwefelatom (-S-) an das Gerüst gebunden sind;
**Alkylamino:** eine geradkettige oder verzweigte Alkylgruppe mit 1 bis 10 Kohlenstoffatomen (wie vorstehend genannt), welche über eine Aminogruppe (-NH-) an das Gerüst gebunden ist;
**Dialkylamino:** zwei voneinander unabhängige geradkettige oder verzweigte Alkylgruppen mit jeweils 1 bis 10 Kohlenstoffatomen (wie vorstehend genannt), welche über ein Stickstoffatom an das Gerüst gebunden sind;
**Alkylcarbonyl:** eine geradkettige oder verzweigte Alkylgruppe mit 1 bis 10 Kohlenstoffatomen (wie vorstehend genannt), welche über eine Carbonylgruppe (-CO-) an das Gerüst gebunden ist;
**Alkoxycarbonyl:** eine Alkoxygruppe mit 1 bis 10 Kohlenstoffatomen (wie vorstehend genannt), welche über eine Carbonylgruppe (-CO-) an das Gerüst gebunden ist;
**Alkylthiocarbonyl:** eine Alkylthiogruppe mit 1 bis 10 Kohlenstoffatomen (wie vorstehend genannt), welche über eine Carbonylgruppe (-CO-) an das Gerüst gebunden ist;
**Alkylaminocarbonyl:** eine Alkylaminogruppe mit 1 bis 10 Kohlenstoffatomen (wie vorstehend genannt), welche über eine Carbonylgruppe (-CO-) an das Gerüst gebunden ist;
**Dialkylaminocarbonyl:** eine Dialkylaminogruppe (wie vorstehend genannt), welche über eine Carbonylgruppe (-CO-) an das Gerüst gebunden ist;
**Alkylcarbonyloxy:** eine geradkettige oder verzweigte Alkylgruppe mit 1 bis 10 Kohlenstoffatomen (wie vorstehend genannt), welche über eine Carbonyloxygruppe (-CO₂-) an das Gerüst gebunden ist;
**Alkylsulfonyl:** eine geradkettige oder verzweigte Alkylgruppe mit 1 bis 10 Kohlenstoffatomen (wie vorstehend genannt), welche über eine Sulfonylgruppe (-SO₂-) an das Gerüst gebunden ist;
**Alkoxysulfonyl:** eine Alkoxygruppe mit 1 bis 10 Kohlenstoffatomen (wie vorstehend genannt), welche über eine Sulfonylgruppe (-SO₂-) an das Gerüst gebunden ist;
**Alkenyl:** ungesättigte, geradkettige oder verzweigte Kohlenwasserstoffreste mit 2 bis 4, 6, 8 oder 10 Kohlenstoffatomen und einer Doppelbindung in einer beliebigen Position, z.B. C₂-C₆-Alkenyl wie Ethenyl, 1-Propenyl, 2-Propenyl, 1-Methylethenyl, 1-Butenyl, 2-Butenyl, 3-Butenyl, 1-Methyl-1-propenyl, 2-Methyl-1-propenyl, 1-Methyl-2-propenyl, 2-Methyl-2-propenyl, 1-Pentenyl, 2-Pentenyl, 3-Pentenyl, 4-Pentenyl, 1-Methyl-1-butenyl, 2-Methyl-1-butenyl, 3-Methyl-1-butenyl, 1-Methyl-2-butenyl, 2-Methyl-2-butenyl, 3-Methyl-2-butenyl, 1-Methyl-3-butenyl, 2-Methyl-3-butenyl, 3-Methyl-3-butenyl, 1,1-Dimethyl-2-propenyl, 1,2-Dimethyl-1-propenyl, 1,2-Dimethyl-2-propenyl, 1-Ethyl-1propenyl, 1-Ethyl-2-propenyl, 1-Hexenyl, 2-Hexenyl, 3-Hexenyl, 4-Hexenyl, 5-Hexenyl, 1-Methyl-2-pentenyl, 2-Methyl-1-pentenyl, 3-Methyl-1-pentenyl, 4-Methyl-1-pentenyl, 1-Methyl-2-pentenyl, 2-Methyl-2-pentenyl, 3-Methyl-2-pentenyl, 4-Methyl-2-pentenyl, 1-Methyl-3-pentenyl, 2-Methyl-3pentenyl, 3-Methyl-3-pentenyl, 4-Methyl-3-pentenyl, 1-Methyl-9-pentenyl, 2-Methyl-4-pentenyl, 3-Methyl-4-pentenyl, 4-Methyl-4-pentenyl, 1,1-Dimethyl-2-butenyl, 1,1-Dimethyl-3-butenyl, 1,2-Dimethyl-1-butenyl, 1,2-Dimethyl-2-butenyl, 1,2-Dimethyl-3-butenyl, 1,3-Dimethyl-1-butenyl, 1,3-Dimethyl-2-butenyl, 1,3-Dimethyl-3-butenyl, 2,2-Dimethyl-3-butenyl, 2,3-Dimethyl-1-butenyl, 2,3-Dimethyl-2-butenyl, 2,3-Dimethyl-3-butenyl, 3,3-Di- methyl-1-butenyl, 3,3-Dimethyl-2-butenyl, 1-Ethyl-1-butenyl, 1-Ethyl-2-butenyl, 1-Ethyl-3-butenyl, 2-Ethyl-1-butenyl, 2-Ethyl-2-butenyl, 2-Ethyl-3-butenyl, 1,1,2-Trimethyl-2-propenyl, 1-Ethyl-1-methyl-2-propenyl, 1-Ethyl-2-methyl-1propenyl und 1-Ethyl-2-methyl-2-propenyl;
**Halogenalkenyl:** ungesättigte, geradkettige oder verzweigte Kohlenwasserstoffreste mit 2 bis 10 Kohlenstoffatomen und einer Doppelbindung in einer beliebigen Position (wie vorstehend genannt), wobei in diesen Gruppen die Wasserstoffatome teilweise oder vollständig gegen Halogenatome wie vorstehend genannt, insbesondere Fluor, Chlor und Brom, ersetzt sein können;
**Alkenyloxy:** ungesättigte, geradkettige oder verzweigte Kohlenwasserstoffreste mit 3 bis 10 Kohlenstoffatomen und einer Doppelbindung in einer beliebigen, nicht zum Heteroatom benachbarten, Position (wie vorstehend genannt), welche über ein Sauerstoffatom (-O-) an das Gerüst gebunden sind;
**Halogenalkenyloxy:** ungesättigte, geradkettige oder verzweigte Alkenyloxygruppen mit 3 bis 10 Kohlenstoffatomen (wie vorstehend genannt), wobei in diesen Gruppen die Wasserstoffatome teilweise oder vollständig gegen Halogenatome wie vorstehend genannt, insbesondere Fluor, Chlor und Brom, ersetzt sein können;
**Alkenylthio:** ungesättigte, geradkettige oder verzweigte Kohlenwasserstoffreste mit 3 bis 10 Kohlenstoffatomen und einer Doppelbindung in einer beliebigen, nicht zum Heteroatom benachbarten, Position (wie vorstehend genannt), welche über ein Schwefelatom (-S-) an das Gerüst gebunden sind;
**Alkenylamino:** ungesättigte, geradkettige oder verzweigte Kohlenwasserstoffreste mit 3 bis 10 Kohlenstoffatomen und einer Doppelbindung in einer beliebigen, nicht zum Heteroatom benachbarten, Position (wie vorstehend genannt), welche über eine Aminogruppe (-NH-) an das Gerüst gebunden sind;
**Alkenylcarbonyl:** ungesättigte, geradkettige oder verzweigte Kohlenwasserstoffreste mit 2 bis 10 Kohlenstoffatomen und einer Doppelbindung in einer beliebigen Position (wie vorstehend genannt), welche über eine Carbonylgruppe (-CO-) an das Gerüst gebunden sind;
**Alkenyloxycarbonyl:** geradkettige oder verzweigte Alkenyloxygruppen mit 3 bis 10 Kohlenstoffatomen (wie vorstehend genannt), welche über eine Carbonylgruppe (-CO-) an das Gerüst gebunden sind;
**Alkenylthiocarbonyl:** geradkettige oder verzweigte Alkenylthiogruppen mit 3 bis 10 Kohlenstoffatomen (wie vorstehend genannt), welche über eine Carbonylgruppe (-CO-) an das Gerüst gebunden sind;
**Alkenylaminocarbonyl:** geradkettige oder verzweigte Alkenylaminogruppen mit 3 bis 10 Kohlenstoffatomen (wie vorstehend genannt), welche über eine Carbonylgruppe (-CO-) an das Gerüst gebunden sind;
**Alkenylcarbonyloxy:** ungesättigte, geradkettige oder verzweigte Kohlenwasserstoffreste mit 2 bis 10 Kohlenstoffatomen und einer Doppelbindung in einer beliebigen Position (wie vorstehend genannt), welche über eine Carbonyloxygruppe (-CO₂-) an das Gerüst gebunden ist;
**Alkinyl:** geradkettige oder verzweigte Kohlenwasserstoffgruppen mit 2 bis 4, 6, 8 oder 10 Kohlenstoffatomen und einer Dreifachbindüng in einer beliebigen Position, z.B. C₂-C₆-Alkinyl wie Ethinyl, 1-Propinyl, 2-Propinyl, 1-Butinyl, 2-Butinyl, 3-Butinyl, 1-Methyl-2-propinyl, 1-Pentinyl, 2-Pentinyl, 3-Pentinyl, 4-Pentinyl, 1-Methyl-2-butinyl, 1-Methyl-3-butinyl, 2-Methyl-3-butinyl, 3-Methyl-1-butinyl, 1,1-Dimethyl-2-propinyl, 1-Ethyl-2-propinyl, 1-Hexinyl, 2-Hexinyl, 3-Hexinyl, 4-Hexinyl, 5-Hexinyl, 1-Methyl-2-pentinyl, 1-Methyl-3-pentinyl, 1-Methyl-4-pentinyl, 2-Methyl-3-pentinyl, 2-Methyl-4-pentinyl, 3-Methyl-1-pentinyl, 3-Methyl-4-pentinyl, 4-Methyl-1-pentinyl, 4-Methyl-2-pentinyl, 2,1-Dimethyl-2-butinyl, 1,1-Dimethyl-3-butinyl, 1,2-Dimethyl-3-butinyl, 2,2-Dimethyl-3-butinyl, 3,3-Dimethyl-1-butinyl, 1-Ethyl-2-butinyl, 1-Ethyl-3-butinyl, 2-Ethyl-3-butinyl und 1-Ethyl-1-methyl-2-propinyl;
**Halogenalkinyl:** ungesättigte, geradkettige oder verzweigte Kohlenwasserstoffreste mit 2 bis 10 Kohlenstoffatomen und einer Dreifachbindung in einer beliebigen Position (wie vorstehend genannt), wobei in diesen Gruppen die Wasserstoffatome teilweise oder vollständig gegen Halogenatome wie vorstehend genannt, insbesondere Fluor, Chlor und Brom, ersetzt sein können;
**Alkinyloxy:** ungesättigte, geradkettige oder verzweigte Kohlenwasserstoffreste mit 3 bis 10 Kohlenstoffatomen und einer Dreifachbindung in einer beliebigen, nicht zum Heteroatom benachbarten, Position (wie vorstehend genannt), welche über ein Sauerstoffatom (-O-) an das Gerüst gebunden sind;
**Halogenalkinyloxy:** ungesättigte, geradkettige oder verzweigte Alkinyloxygruppen mit 3 bis 10 Kohlenstoffatomen (wie vorstehend genannt), wobei in diesen Gruppen die Wasserstoffatome teilweise oder vollständig gegen Halogenatome wie vorstehend genannt, insbesondere Fluor, Chlor und Brom, ersetzt sein können;
**Cycloalkyl:** monocyclische, gesättigte Kohlenwasserstoffgruppen mit 3 bis 6, 8, 10 oder 12 Kohlenstoffringgliedern, z.B. C₃-C₈-Cycloalkyl wie Cyclopropyl, Cyclobutyl, Cyclopentyl, Cyclohexyl, Cycloheptyl und Cyclooctyl;
**Cycloalkoxy:** monocyclische, gesättigte Kohlenwasserstoffgruppen mit 3 bis 12 Kohlenstoffringgliedern (wie vorstehend genannt), welche über ein Sauerstoffatom (-O-) an das Gerüst gebunden sind;
**Cycloalkylthio:** monocyclische, gesättigte Kohlenwasserstoffgruppen mit 3 bis 12 Kohlenstoffringgliedern (wie vorstehend genannt), welche über ein Schwefelatom (-S-) an das Gerüst gebunden sind;
**Cycloalkylamino:** monocyclische, gesättigte Kohlenwasserstoffgruppen mit 3 bis 12 Kohlenstoffringgliedern (wie vorstehend genannt), welche über eine Aminogruppe (-NH-) an das Gerüst gebunden sind;
**Cycloalkylcarbonyl:** monocyclische, gesättigte Kohlenwasserstoffgruppen mit 3 bis 12 Kohlenstoffringgliedern (wie vorstehend genannt), welche über eine Carbonylgruppe (-CO-) an das Gerüst gebunden sind;
**Cycloalkoxycarbonyl:** eine monocyclische Cycloalkoxygruppe mit 3 bis 12 Kohlenstoffringgliedern (wie vorstehend genannt), welche über eine Carbonylgruppe (-CO-) an das Gerüst gebunden ist;
**Cycloalkylthiocarbonyl:** eine monocyclische Cycloalkylthiogruppe mit 3 bis 12 Kohlenstoffringgliedern (wie vorstehend genannt), welche über eine Carbonylgruppe (-CO-) an das Gerüst gebunden ist;
**gesättigter oder partiell ungesättigter cyclischer Rest, welcher neben Kohlenstoffatomen als Ringglieder Heteroatome aus der Gruppe Sauerstoff, Schwefel oder Stickstoff enthalten kann:** Cycloalkyl mit 3 bis 12 Kohlenstoffringgliedern wie vorstehend genannt oder 5- oder 6-gliedrige Heterocyclen (Heterocyclyl) enthaltend neben Kohlenstoffringgliedern ein bis drei Stickstoffatome und/oder ein Sauerstoff- oder Schwefelatom oder ein oder zwei Sauerstoff- und/oder Schwefelatome, z.B. 2-Tetrahydrofuranyl, 3-Tetrahydrofuranyl, 2-Tetrahydrothienyl, 3-Tetrahydrothienyl, 2-Pyrrolidinyl, 3-Pyrrolidinyl, 3-Isoxazolidinyl, 4-Isoxazolidinyl, 5-Isoxazolidinyl, 3-Isothiazolidinyl, 4-Isothiazolidinyl, 5-Isothiazolidinyl, 3-Pyrazolidinyl, 4-Pyrazolidinyl, 5-Pyrazolidinyl, 2-Oxazolidinyl, 4-Oxazolidinyl, 5-Oxazolidinyl, 2-Thiazolidinyl, 4-Thiazolidinyl, 5-Thiazolidinyl, 2-Imidazolidinyl, 4-Imidazolidinyl, 1,2,4-Oxadiazolidin-3-yl, 1,2,4-Oxadiazolidin-5-yl, 1,2,4-Thiadiazolidin-3-yl, 1,2,4-Thiadiazolidin-5-yl, 1,2,4-Triazolidin-3-yl, 1,3,4-Oxadiazolidin-2-yl, 1,3,4-Thiadiazolidin-2-yl, 1,3,4-Triazolidin-2-yl, 2,3-Dihydrofur-2-yl, 2,3-Dihydrofur-3-yl, 2,4-Dihydrofur-2-yl, 2,4-Dihydrofur-3-yl, 2,3-Dihydrothien-2-yl, 2,3-Dihydrothien-3-yl, 2,4-Dihydrothien-2-yl, 2,4-Dihydrothien-3-yl, 2,3-Pyrrolin-2-yl, 2,3-Pyrrolin-3-yl, 2,4-Pyrrolin-2-yl, 2,4-Pyrrolin-3-yl, 2,3-Isoxazolin-3-yl, 3,4-Isoxazolin-3-yl, 4,5-Isoxazolin-3-yl, 2,3-Isoxazolin-4-yl, 3,4-Isoxazolin-4-yl, 4,5-Isoxazolin-4-yl, 2,3-Isoxazolin-5-yl, 3,4-Isoxazolin-5-yl, 4,5-Isoxazolin-5-yl, 2,3-Isothiazolin-3-yl, 3,4-Isothiazolin-3-yl, 4,5-Isothiazolin-3-yl, 2,3-Isothiazolin-4-yl, 3,4-Isothiazolin-4-yl, 4,5-Isothiazolin-4-yl, 2,3-Isothiazolin-5-yl, 3,4-Isothiazolin-5-yl, 4,5-Isothiazolin-5-yl, 2,3-Dihydropyrazol-1-yl, 2,3-Dihydropyrazol-2-yl, 2,3-Dihydropyrazol-3-yl, 2,3-Dihydropyrazol-4-yl, 2,3-Dihydropyrazol-5-yl, 3,4-Dihydropyrazol-1-yl, 3,4-Dihydropyrazol-3-yl, 3,4-Dihydropyrazol-4-yl, 3,4-Dihydropyrazol-5-yl, 4,5-Dihydropyrazol-1-yl, 4,5-Dihydropyrazol-3-yl, 4,5-Dihydropyrazol-4-yl, 4,5-Dihydropyrazol-5-yl, 2,3-Dihydrooxazol-2-yl, 2,3-Dihydrooxazol-3-yl, 2,3-Dihydrooxazol-4-yl, 2,3-Dihydrooxazol-5-yl, 3,4-Dihydrooxazol-2-yl, 3,4-Dihydrooxazol-3-yl, 3,4-Dihydrooxazol-4-yl, 3,4-Dihydrooxazol-5-yl, 3,4-Dihydrooxazol-2-yl, 3,4-Dihydrooxazol-3-yl, 3,4-Dihydrooxazol-4-yl, 2-Piperidinyl, 3-Piperidinyl, 4-Piperidinyl, 1,3-Dioxan-5-yl, 2-Tetrahydropyranyl, 4-Tetrahydropyranyl, 2 -Tetrahydrothienyl, 3-Tetrahydropyridazinyl, 4-Tetrahydropyridazinyl, 2-Tetrahydropyrimidinyl, 4-Tetrahydropyrimidinyl, 5-Tetrahydropyrimidinyl, 2-Tetrahydropyrazinyl, 1,3,5-Tetrahydro-triazin-2-yl und 1,2,4-Tetrahydrotriazin-3-yl;
**Aryl:** ein ein- bis dreikerniges aromatisches Ringsystem enthaltend 6 bis 14 Kohlenstoffringglieder, z.B. Phenyl, Naphthyl und Anthracenyl;
**Aryloxy:** ein ein- bis dreikerniges aromatisches Ringsystem (wie vorstehend genannt), welches über ein Sauerstoffatom (-O-) an das Gerüst gebunden ist;
**Arylthio:** ein ein- bis dreikerniges aromatisches Ringsystem (wie vorstehend genannt), welches über ein Schwefelatom (-S-) an das Gerüst gebunden ist;
**Arylamino:** ein ein- bis dreikerniges aromatisches Ringsystem (wie vorstehend genannt), welches über eine Aminogruppe (-NH-) an das Gerüst gebunden ist;
**Azylcarbonyl:** ein ein- bis dreikerniges aromatisches Ringsystem (wie vorstehend genannt), welches über eine Carbonylgruppe (-CO-) an das Gerüst gebunden ist;
**Aryloxycarbonyl:** eine ein- bis dreikernige Aryloxygruppe (wie vorstehend genannt), welche über eine Carbonylgruppe (-CO-) an das Gerüst gebunden ist;
**Arylthiocarbonyl:** eine ein- bis dreikernige Arylthiogruppe (wie vorstehend genannt), welche über eine Carbonylgruppe (-CO-) an das Gerüst gebunden ist;
**Arylaminocarbonyl:** eine ein- bis dreikernige Arylaminogruppe (wie vorstehend genannt), welche über eine Carbonylgruppe (-CO-) an das Gerüst gebunden ist;
**Arylcarbonyloxy:** ein ein- bis dreikerniges aromatisches Ringsystem (wie vorstehend genannt), welches über eine Carbonyloxygruppe (-CO₂-) an das Gerüst gebunden ist;
**Arylcarbonylthio:** ein ein- bis dreikerniges aromatisches Ringsystem (wie vorstehend genannt), welches über eine Carbonylthiogruppe (-COS-) an das Gerüst gebunden ist;
**Arylcarbonylamino:** ein ein- bis dreikerniges aromatisches Ringsystem (wie vorstehend genannt), welches über eine Carbonylaminogruppe (-CONH-) an das Gerüst gebunden ist;
**Arylsulfonyl:** ein ein- bis dreikerniges aromatisches Ringsystem (wie vorstehend genannt), welches über eine Sulfonylgruppe (-SO₂-) an das Gerüst gebunden ist;
**Aryloxysulfonyl:** eine ein- bis dreikernige Aryloxygruppe (wie vorstehend genannt), welche über eine Sulfonylgruppe (-SO₂-) an das Gerüst gebunden ist;
**aromatisches Ringsystem, welches neben Kohlenstoffringgliedern Heteroatome aus der Gruppe Sauerstoff, Schwefel und Stickstoff enthalten kann:** Aryl wie vorstehend genannt oder ein- oder zweikerniges Heteroaryl, z.B.
   - 5-gliedriges Heteroaryl, enthaltend ein bis vier Stickstoffatome oder ein bis drei Stickstoffatome und ein Schwefel- oder Sauerstoffatom: 5-Ring Heteroarylgruppen, welche neben Kohlenstoffatomen ein bis vier Stickstoffatome oder ein bis drei Stickstoffatome und ein Schwefel- oder Sauerstoffatom als Ringglieder enthalten können, z.B. 2-Furyl, 3-Furyl, 2-Thienyl, 3-Thienyl, 2-Pyrrolyl, 3-Pyrrolyl, 3-Isoxazolyl, 4-Isoxazolyl, 5-Isoxazolyl, 3-Isothiazolyl, 4-Isothiazolyl, 5-Isothiazolyl, 3-Pyrazolyl, 4-Pyrazolyl, 5-Pyrazolyl, 2-Oxazolyl, 4-Oxazolyl, 5-Oxazolyl, 2-Thiazolyl, 4-Thiazolyl, 5-Thiazolyl, 2-Imidazolyl, 4-Imidazolyl, 1,2,4-Oxadiazol-3-yl, 1,2,4-Oxadiazol-5-yl, 1,2,4-Thiadiazol-3-yl, 1,2,4-Thiadiazol-5-yl, 1,2,4-Triazol-3-yl, 1,3,4-Oxadiazol-2-yl, 1,3,4-Thiadiazol-2-yl und 1,3,4-Triazol-2-yl;
   - benzokondensiertes 5-gliedriges Heteroaryl, enthaltend ein bis drei Stickstoffatome oder ein Stickstoffatom und ein Sauerstoff- oder Schwefelatom: 5-Ring Heteroarylgruppen, welche neben Kohlenstoffatomen ein bis vier Stickstoffatome oder ein bis drei Stickstoffatome und ein Schwefel- oder Sauerstoffatom als Ringglieder enthalten können, und in welchen zwei benachbarte Kohlenstoffringglieder oder ein Stickstoff- und ein benachbartes Kohlenstoffringglied durch eine Buta-1,3-dien-1,4-diylgruppe verbrückt sein können;
   - über Stickstoff gebundenes 5-gliedriges Heteroaryl, enthaltend ein bis vier Stickstoffatome, oder über Stickstoff gebundenes benzokondensiertes 5-gliedriges Heteroaryl, enthaltend ein bis drei Stickstoffatome: 5-Ring Heteroarylgruppen, welche neben Kohlenstoffatomen ein bis vier Stickstoffatome bzw. ein bis drei Stickstoffatome als Ringglieder enthalten können, und in welchen zwei benachbarte Kohlenstoffringglieder oder ein Stickstoff- und ein benachbartes Kohlenstoffringglied durch eine Buta-1,3-dien-1,4-diylgruppe verbrückt sein können, wobei diese Ringe über eines der Stickstoffringglieder an das Gerüst gebunden sind;
   - 6-gliedriges Heteroaryl, enthaltend ein bis drei bzw, ein bis vier Stickstoffatome: 6-Ring Heteroarylgruppen, welche neben Kohlenstoffatomen ein bis drei bzw. ein bis vier Stickstoffatome als Ringglieder enthalten können, z.B. 2-Pyridinyl, 3-Pyridinyl, 4-Pyridinyl, 3-Pyridazinyl, 4-Pyridazinyl, 2-Pyrimidinyl, 4-Pyrimidinyl, 5-Pyrimidinyl, 2-Pyrazinyl, 1,3,5-Triazin-2-yl und 1,2,4-Triazin-3-yl;

Im übrigen entsprechen die Substituenten denen, die in WO 97/15552 beschrieben sind.

Weiterhin kommen als fungizide Pflanzenschutz-Wirkstoffe in **Betracht:**
(+)-cis-1-(4-Chlorphenyl)-2-(1H-1,2,4-triazol-1-yl)cycloheptanol, Metsulfovax, Cyprodinil, Methyl-(E)-2-{2-[6-(2-cyanophenoxy)pyrimidin-4-yloxy]phenyl}-3-methoxyacrylat und die Azol-Wirkstoffe N-propyl-N-[2,4,6-trichlorophenoxy)ethyl]imidazol-1-carboxamid (Prochloraz), (Z)-2-(1,2,4,-Triazol-1-yl-methyl)-2-(4-fluorphenyl)-3-(2-chlorphenyl)-oxiran (Epoxiconazol), 1-Butyl-1-(2,4-dichlorphenyl)-2-(1,2,4-triazol-1-yl)-ethanol (Hexaconazol), 1-[(2-Chlorphenyl)methyl]-1-(1,1-dimethyl)-2-(1,2,4-triazol-1-yl-ethanol, 1-(4-Fluorphenyl)-1-(2-fluorphenyl)-2-(1,2,4-triazol-1-yl)ethanol (Flutriafol), (RS)-4-(4-Chlorphenyl)-2-phenyl-2-(1H-1,2,4-triazol-1-ylmethyl)-butyronitril, 1-[(2 RS, 4 RS; 2 RS, 4 SR)-4-Brom-2-(2,4-dichlorphenyl)-tetrahydrofurfuryl]-1H-1,2,4-triazol, 3-(2,4-Dichlorphenyl)-2-(1H-1,2,4-triazol-1-yl)-quizazolin-4-(3H)-on, (RS)-2,2-Dimethyl-3-(2-chlorbenzyl)-4-(1H-1,2,4-triazol-1-yl)-butan-3-ol, Bitertanol, Triadimefon, Triadimenol, Bromuconazol, Cyproconazol, Dichlobutrazol, Difenoconazol, Diniconazol, Etaconazol, Fluquinconazol, Imibenconazol, Propiconazol, Flusilazol, Tebuconazol, Imazalil, Penconazol, Tetraconazol, Triflumizol, Metconazol, Fluquinconazol, Fenbuconazol, Triticonazol.

Vorzugsweise entstammen die fungiziden Pflanzenschutz-Wirkstoffe der Gruppe: Tridemorph, Fenpropimorph, Fenpropidin und Azol-Wirkstoffe, wobei aus der Gruppe Tridemorph, Fenpropimorph und Fenpropidin ein oder mehrere Wirkstoffe in den erfindungsgemäßen CR-Bodengranulaten vorliegen können.

Bevorzugt werden von den Azol-Wirkstoffen: Prochloraz, Epoxiconazol, Hexaconazol, Cyproconazol, Difenoconazol, Propiconazol, Flusilazol, Diniconazol, Triticonazol und Tebuconazol, wobei Epoxiconazol mit besonderem Vorteil verwendet wird.

Weiterhin geeignet sind Valinamid-Wirkstoffe, daraus bevorzugt:
N¹-[1-(4-Chlorphenyl)-1-ethyl]-N²-isopropoxycarbonyl-L-valinamid,
N¹-[1-(4-Methylphenyl)-1-ethyl]-N²-isopropoxycarbonyl-L-valinamid,
N¹-[1-(4-Methoxyphenyl)-1-ethyl]-N²-isopropoxycarbonyl-L-valinamid,
N¹-[1-R-(2-Naphthyl)-1-ethyl]-N²-isopropoxycarbonyl-L-valinamid,

Aus der Gruppe der Resistenzinduktoren wird bevorzugt Bion®(1,2,3-Benzthiadiazol-7-carbonsäure-S-methylthioester) eingesetzt.

Bevorzugt werden aus der Gruppe der Salicylate Verbindungen der Formel III 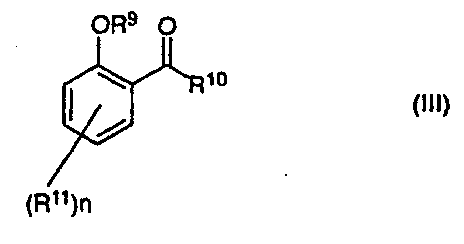 eingesetzt, wobei R⁹ bedeutet:
n-, i- oder tert. C₁-C₈-Alkyl, C₁-C₈-Alkoxyalkyl oder C₁-C₈-Halogenalkyl, n- oder i- C₁-C₈-Alkylcarbonyl, bevorzugt Acetyl, Propionyl, Benzoyl, C₁-C₈-Alkylbenzoyl, C₁-C₈-Halogenalkylbenzoyl, C₁-C₈-Alkoxybenzoyl oder Wasserstoff, Hydroxycarbonyl-C₁-C₄-alkyl, C₁-C₄-Alkoxycarbonyl-C₁-C₄-alkyl,
R¹⁰ kann Hydroxy, n- oder i- oder tert.- C₁-C₈-Alkyloxy, C₁-C₈-Halogenalkyloxy, C₁-C₄-Alkoxy-C₁-C₄-alkoxy bedeuten, ferner Amino-, C₁-C₈-Alkylcarbonylamino oder substituiertes oder unsubstituiertes Arylcarbonylamino oder bevorzugt Benzoylamino, C₁-C₆-Alkylamino, di-C₁-C₆-Alkylamino, substituiertes (1-3 Substituenten aus Halogen, CN, NO₂, OH, NH₂, CO₂H, CONH₂, C₁-C₄-Alkyl, C₁-C₄-Halogenalkyl, C₁-C₄-Alkoxy, C₁-C₄-Halogenalkoxy, C₁-C₄-Alkoxycarbonyl, C₁-C₄-Alkylamino, di-C₁-C₄-Alkylamino) oder unsubstituiertes Arylamino (insbesondere Phenylamino) bedeuten.

R¹¹ kann unabhängig voneinander bedeuten:
Wasserstoff, Fluor, Chlor oder Iod, n-oder i-oder tert-. C₁-C₈-Alkyl, C₁-C₈-Alkoxyalkyl oder C₁-C₈-Halogenalkyl ferner einer unsubstituierten oder einfach oder bis zu dreifach substituierten Arylrest gemäß Formel IV, 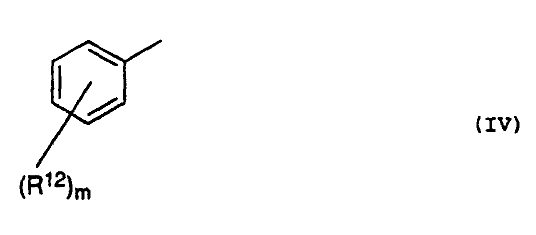 wobei der Index m bzw. n 0-3 bedeuten kann und der Rest R¹² die Bedeutung hat wie für R¹¹ angegeben.

Besonders bevorzugt sind dabei die Verbindungen:
Acetyl-Salicylsäure, Salacetamid, Salicylamid, Ethenzamid, Diflunisal, Salicylanilid und (2-Carbamoylphenoxy)-essigsäure.

Die Pflanzenschutz-Wirkstoffe können auch in Form ihrer Salze oder Metallkomplexe vorliegen. Auch die so erhaltenen Mittel werden von der Erfindung umfaßt.

Die Salze werden hergestellt durch Umsetzung mit Säuren, z.B. Halogenwasserstoffsäuren wie Fluorwasserstoffsäure, Chlorwasserstoff säure, Bromwasserstoffsäure oder Jodwasserstoffsäure oder Schwefelsäure, Phosphorsäure, Salpetersäure oder organischen Säuren wie Essigsäure, Trifluoressigsäure, Trichloressigsäure, Propionsäure, Glycolsäure, Milchsäure, Bernsteinsäure, Zitronensäure, Benzoesäure, Zimtsäure, Oxalsäure, Ameisensäure, Benzolsulfonsäure, p-Toluolsulfonsäure, Methansulfonsäure, Salicylsäure, p-Aminosalicylsäure oder 1,2-Naphthalindisulfonsäure.

Metallkomplexe können wahlweise nur einen oder auch mehrere Pflanzenschutz-Wirkstoffe enthalten. Es lassen sich auch Metallkomplexe herstellen, die diese Wirkstoffe miteinander in einem gemischten Komplex enthalten.

Metallkomplexe werden hergestellt aus dem zugrundeliegenden organischen Molekül und einem anorganischen oder organischen Metallsalz, beispielsweise den Halogeniden, Nitraten, Sulfaten, Phosphaten, Acetaten, Trifluoracetaten, Trichloracetaten, Propionaten, Tartraten, Sulfonaten, Salicylaten, Benzoaten der Metalle der zweiten Hauptgruppe wie Calcium und Magnesium und der dritten und vierten Hauptgruppe wie Aluminium, Zinn oder Blei sowie der ersten bis achten Nebengruppe wie Chrom, Mangan, Eisen, Kobalt, Nickel, Kupfer, Zink. Bevorzugt sind die Nebengruppen-Elemente der 4. Periode und insbesondere Kupfer. Die Metalle können dabei in den verschiedenen ihnen zukommenden Wertigkeiten vorliegen. Die Metallkomplexe können einen oder mehrere organische Molekülanteile als Liganden enthalten.

Die Bekämpfung von Schadpilzen mit den erfindungsgemäßen CR-Bodengranulaten erfolgt zweckmäßig in der Weise, daß man eine fungizid wirksame Menge des CR-Bodengranulats in oder auf dem Ackerboden, auf das im Ackerboden ausgebrachte Saatgut oder auf die sich daraus entwickelnden Pflanzen bzw. auf Sämlinge einwirken läßt.

Die Ausbringung der erfindungsgemäßen CR-Bodengranulate erfolgt bei einjährigen Pflanzen vorteilhafterweise mit der Aussaat. Durch eine Modifikation der handelsüblichen Drillmaschinen, kann das Granulat in dem gleichen Drillschar mit dem Saatgut appliziert werden. Die Ablage der erfindungsgemäßen CR-Bodengranulate erfolgt damit in gleicher oder unterschiedlicher Tiefe wie die Ablage des Saatgutes. Die Anzahl der Wirkstoffgranulate pro Saatgutkorn kann variabel erfolgen. Die Drillmaschinen werden mit einem separaten Vorlagebehälter für die erfindungsgemäßen CR-Bodengranulate ausgerüstet. Das erfindungsgemäße CR-Bodengranulat wird über eine Dosiereinrichtung, vergleichbar der des Saatgutes in Einzelgranulate separiert und über ein separates Rohr dem gemeinsamen Drillschar zugeführt. Als Drillmaschinen können handelsübliche Drillsysteme, für Saatgut und Granulat, die für ein gemeinsames Ausbringen von Düngern und Saatgut entwickelt wurden, eingesetzt werden.

Durch die verzögerte Freisetzung der Wirkstoffe kann die Freisetzungsrate der Wirkstoffe im Boden so gesteuert werden, daß etwa im Falle der fungiziden Pflanzenschutz-Wirkstoffe ein wirksamer Schutz vor Pilzkrankheiten über die gesamte Vegetationsperiode hinweg aufrechterhalten werden kann. Die Wirkstoffaufnahme erfolgt kontinuierlich über die Wurzeln in dem Maße der kontrollierten Freisetzung der Wirkstoffe aus den erfindungsgemäß formulierten Wirkstoffen, und die Wirkstoffe werden dann über die Wurzeln systemisch in den Pflanzen verteilt.

Gegenüber der zur Pilzbekämpfung verbreiteten Spritzapplikation der Pflanzenschutz-Wirkstoffe bietet das erfindungsgemäße Verfahren die folgenden Vorteile:
- Mit einer einzigen Ausbringung der erfindungsgemäß formulierten Wirkstoffe im Ackerboden, die vorteilhaft zusammen mit dem Saatgut bzw. mit der Einpflanzung von Sämlingen erfolgt, kann ein wirksamer Schutz der Pflanze etwa gegen Pilzkrankheiten über die gesamte Vegetationsperiode erzielt werden.
- Hierdurch entfällt die bisher übliche Anwendung von mehreren Spritzapplikationen in der wachsenden Kultur, wodurch ein erheblicher Arbeitsaufwand eingespart werden kann.
- Durch die Applikation der Pflanzenschutz-Wirkstoffe in Form der erfindungsgemäßen Formulierung können sich geringere Mengen an den auszubringenden Wirkstoffen ergeben.
- Eine Abdrif t der Pflanzenschutzwirkstoffe - wie bei der Spritzapplikation vorkommend - wird durch diese Anwendung ausgeschlossen.
- Bei Anwendung des erfindungsgemäßen Verfahrens kann eine Saatgutbeizung entfallen.

Die erfindungsgemäßen CR-Bodengranulate werden vorzugsweise als Umhüllungsgranulate hergestellt, indem die Wirkstoffe zunächst auf feste granulatförmige Trägerstoffe auf getragen werden. Die erhaltenen wirkstoffhaltigen Granulate werden anschließend mit geeigneten Hüllsubstanzen umhüllt, die eine verzögerte kontrollierte Wirkstoffreigabe bewirken.

Geeignete feste Trägerstoffe für die erfindungsgemäßen CR-Bodengranulate sind beispielsweise Mineralerden wie Silicagel, Kieselsäuren, Kieselgele, Silikate, Talkum, Kaolin, Kalkstein, Kalk, Kreide, Bolus, Sand, Löß, Ton, Dolomit, Diatomeenerde, Calciumund Magnesiumsulfat, Magnesiumoxid, gemahlene Kunststoffe, Düngemittel wie Ammoniumsulfat, Ammoniumphosphat, Ammoniumnitrat, Harnstoffe, z.B. Crotonylidendiharnstoff, Isobutylidendiharnstoff und pflanzliche Produkte wie Getreidemehl, Maismehl, Baumrinden-, Holz- und Nußschalenmehl, Maisschrot, Cellulosepulver, Düngemittel. Bevorzugt sind Düngemittelgranulate oder -pellets als Trägerstoff, und zwar insbesondere solche, die Phosphat enthalten. Ganz besonders bevorzugt wird Sand.

Die Granulate weisen im allgemeinen einen Korndurchmesser von 0,1 bis 10 mm, vorzugsweise 0,5 bis 8 mm, insbesondere 0,5 bis 3 mm auf.

Das Aufbringen der Wirkstoffe auf die Trägerstoffe erfolgt in der Regel so, daß man sie in Form von Öl-in-Wasser-Emulsionen, Emulsionskonzentraten, Suspoemulsionen, Suspensionskonzentraten oder in organischen Lösungsmitteln oder vorzugsweise in Wasser gelöst aufsprüht.

Das Aufsprühen erfolgt z.B. in Wirbelbettcoatern oder in Trommeln oder Drehtellern, in denen das Trägergranulat gerollt wird, in perforierten Kesseln mit kontrollierter Führung des Trocknungsmediums, zweckmäßig Luft, oder Stickstoff. Im allgemeinen werden für das Aufsprühen und das Trocknen Temperaturen zwischen 30°C und 180°C angewendet, bevorzugt 35°C bis 90°C.

Die Wirkstoffgranulate können als Trägergranulat hergestellt werden.

Ein Trägergranulat besteht prinzipiell aus drei Schichten, einem für die Wirkstoffe inerten Kern (saugfähig oder nicht saugfähig), einer Schicht aus einem oder mehreren Wirkstoffen und einer Deckschicht aus einem semipermeablen Filmbildner. Je nach Anwendungsfall kann die Freisetzung der Wirkstoffe gezielt eingestellt werden. Der bzw. die Wirkstoffe können unter dem Filmbildner fixiert werden, der Filmbildner dient als Deckschicht, die die Wirkstoffabgaberate pro Zeiteinheit steuert. Der Wirkstoff kann gemeinsam mit dem Filmbildner auf die Oberfläche des Trägers appliziert werden, wobei sich hierbei Poren in der Filmschicht ergeben, die Wirkstoff enthalten. Auf diese Art und Weise wird die Wirkstofffreisetzung über den Anteil des Wirkstoffes in der jeweiligen Lage der Hüllschicht gesteuert. Eine weitere Möglichkeit des Granulataufbaues besteht in der schichtweisen Aufbringung von Wirkstoff und Filmbildner analog einer Zwiebelstruktur. Durch diesen Aufbau können zeitlich unterschiedliche Freisetzungsraten eingestellt werden, da zunächst aufgrund des Konzentrationsgefälles die Wirkstoffe aus den aüßeren Schichten abgegeben werden. Ein höherer Wirkstoffgehalt in einer tiefer liegenden Schicht bewirkt somit eine höhere Wirkstoffabgabe zu einem späteren Zeitpunkt des Wachstumsstadiums. Wirkstoffe an der Oberfläche des Granulates führen zu einer Initialwirkung, da diese Anteile des Wirkstoffes zunächst gelöst werden und den Pflanzen zur Aufnahme zur Verfügung stehen.

Die Aufbringung der Wirkstoffe und der Filmbildner erfolgt bevorzugt in Wirbelschicht-Coatern. Durch die Bewegung in der Wirbelschicht entsteht permanent eine gewisse Menge an Abrieb, die als Mikroporen im Filmbildner dient und somit prinzipiell undurchlässige Hüllpolymere für die Wirkstoffmoleküle durchlässig werden läßt. Wie Beispiel 12 zeigt läßt sich die Freisetzungsrate des Wirkstoffes durch die zugeführte Wärmemenge während des Wirbelschichtcoatens gezielt einstellen.

Der den aufgetragenen Wirkstoff enthaltende Trägerstoff wird anschließend mit geeigneten Hüllstoffen umhüllt. Als Hüllstoffe für die kontrollierte Wirkstofffreisetzung aus den Umhüllungsgranulaten werden wäßrige Polymerdispersionen eingesetzt,z.B. Wachsdispersionen enthaltend, bezogen auf die wäßrige Wachsdispersion, 5 bis 40 Gew.-% eines Ethylencopolymerisatwachses, bestehend aus 10 bis 25 Gew.-% einer α-olefinisch ungesättigten Mono- oder Dicarbonsäure mit 3 bis 8 C-Atomen und 90 bis 75 Gew.-% Ethylen mit einem MFI-Wert, gemessen bei 190°C und 2,16 kp Belastung, von 1 bis 600, bevorzugt 5 bis 500, insbesondere 15 bis 300 oder einem MFI-Wert, gemessen bei 160°C und 325 p, von 1 bis 600, 0,1 bis 5 Gew.-% Alkalihydroxid, Ammoniak, ein Alkanolamin oder ein Dialkanolamin und ihre Mischungen und als Rest Wasser zu 100 %.

Die für die Wachsdispersionen zu verwendenden Copolymerisate des Ethylens enthalten 10 bis 25, bevorzugt 15 bis 24 Gew.-% α-olefinisch ungesättigte Mono- oder Dicarbonsäuren mit 3 bis 8 C-Atomen, von denen beispielsweise Acrylsäure, Methacrylsäure, Crotonsäure, Maleinsäure, Fumarsäure und Itaconsäure genannt seien. Davon sind Methacrylsäure und insbesondere Acrylsäure und ihre Mischungen bevorzugt.

Die Ethylen-Copolymerisatwachse sind erfindungsgemäß charakterisiert durch einen speziellen MFI (Melt Flow Index) oder Schmelzindex. Der MFI gibt die Menge der Polymerisatschmelze in Gramm an, die bei einer bestimmten Temperatur durch eine Düse von bestimmten Abmessungen bei einem bestimmten Kraftaufwand (Belastung) gedrückt werden kann. Die Bestimmung der Schmelzindices (MFI-Einheiten) erfolgt nach folgenden Normvorschriften, ASTM D 1238-65 T, ISO R 1133-1696 (E) oder DIN 53 735 (1970), die untereinander identisch sind.

Weiterhin enthalten die Wachsdispersionen meist Basen, und zwar in der Regel 0,1 bis 5, bevorzugt 1 bis 3 Gew.-% Alkalihydroxid, bevorzugt Kaliumhydroxid oder Natriumhydroxid, Ammoniak, ein Mono-, Di- oder Trialkanolamin mit jeweils 2 bis 18 C-Atomen im Hydroxyalkylrest, bevorzugt 2 bis 6 C-Atomen, oder Mischungen der genannten Alkanolamine oder ein Dialkyl-monoalkanolamin mit jeweils 2 bis 8 C-Atomen im Alkyl- und Hydroxyalkylrest oder ihre Mischungen. Als Amine seien beispielsweise genannt Diethanolamin, Triethanolamin, 2-Amino-2-methylpropanol-(1) oder Dimethylethanolamin. Vorzugsweise wird Ammoniak verwendet.

Durch den Baseanteil in den Wachsdispersionen liegen die Carbonsäuregruppen in den Copolymerisatwachsen zumindest teilweise in der Salzform vor. Vorzugsweise sind diese Gruppen zu 50 bis 90 und vor allem zu 60 bis 85 % neutralisiert.

Die Hüllschicht kann zusätzliche Substanzen zur Steuerung der Freisetzung der Wirkstoffe enthalten. Dies sind z.B. wasserlösliche Substanzen wie Polyethylenglykole, Polyvinylpyrrolidon, Copolymerisate aus Polyvinylpyrrolidon und Polyvinylacetat. Deren Menge beträgt beispielsweise 0,1 bis 5 Gew.-%, vorzugsweise 0,1 bis 3 Gew.-%, bezogen auf die Hüllsubstanz.

Als Hüllpolymerdispersionen eignen sich Kombinationen aus nicht wasserlöslichen Polymeren, die als wässrige oder lösemittelhaltige Dispersion verarbeitet werden können, wie beispielsweise:
Copolymerdispersion aus Acryl- und Methacrylsäureestern, Polyethylenwachsemulsionen (75-90 % Ethylen, 10-25 % α-olefinisch ungesättigte Mono-oder Dicarbonsäure),
50 mol% Dimethylterephtalat + ca. 50 mol% Adipinsäure + 150 mol% 1,4-Butandiol,
10-95 % Polyvinylacetat + 5-90% N-Vinylpyrrolidon-haltiges Polymer, (Kollidon 30, BASF AG),
Ethylen-methacrylsäure-Zinksalz (siehe Tabelle 1).

Das Aufbringen der Hüllschicht erfolgt zweckmäßig durch Aufsprühen von Lösungen, Dispersionen oder Dispersion der genannten Hüllsubstanzen in organischen Lösungsmitteln oder Wasser. Vorzugsweise verwendet man eine wäßrige Suspension oder eine Emulsion des Hüllstoffs, welche insbesondere einen Gehalt an Polymersubstanz von 0,1 bis 50 und vor allem von 1 bis 35 Gew.-% aufweisen. Dabei können noch weitere Hilfsstoffe zur Optimierung der Verarbeitbarkeit zugesetzt sein, z.B. oberflächenaktive Substanzen, Feststoffe wie Talkum und/oder Magnesiumstearat und/oder Stärke.

**Tabelle 1:**

| Polymerdispersionen | | | |
|---|---|---|---|
| Hüllpolymer | | Zusammensetzung | Hersteller |
| A | Acronal® 290D | Butylacrylat-Styrol-Copolymer | BASF AG |
| B | Acronal® A 603 | Copolymerdis. aus Acryl - u. Methacrylsäureestern | BASF AG |
| C | Acronal® S 725 | Butylacrylat-Styrol-Copolymer | BASF AG |
| D | Acronal® S 760 | Butylacrylat-Styrol-Copolymer | BASF AG |
| E | Acronal® A 627 | Copolymerdis. aus Acryl - u. Methacrylsäureestern | BASF AG |
| F | Poligen® WE4 | Polyethylenwachsemulsion | BASF AG |
| G | Poligen® WE3 | Polyethylenwachsemulsion (75-90% Ethylen, 10-25%α-olef.unges.Mono-od-Dicarbonsäure, | BASF AG |
| H | Polyester | 50mol% Dimethylterephtalat + ca. 50mol%Adipinsäure + 150mol% 1,4-Butandiol | BASF AG |
| I | PVA | 10-95% Polyvinylacetat + 5-90 %N-Vinylpyrrolidonhaltiges Polymer | BASF AG |
| J | Surlyn® 9970 | Ethylen-methacrylsäure-Zinksalz | Exxon |

Besonders bevorzugt ist eine Wachsdispersion, welche 5 bis 40 Gew.-% eines Ethylen-Copolymerisatwachses, 0,1 bis 5 Gew.-% Ammoniak und 55 bis 94,9 Gew.-% Wasser enthält bzw. aus diesen Komponenten besteht, wobei das Ethylen-Copolymerisatwachs aus 75 bis 90 Gew.-% Ethyleneinheiten und zu 10 bis 25 Gew.-% aus Einheiten einer α-olefinisch ungesättigten Mono- oder Dicarbonsäure mit 3 bis 8 C-Atomen aufgebaut ist.

Die erfindungsgemäß verwendeten Hüllpolymere sind allgemein bekannt oder nach bekannten Methoden erhältlich (vgl. z.B. EP 166 235, EP-A 201 702, US-A 5,206,279).

Das Aufsprühen erfolgt zum Beispiel in Wirbelbettapparaturen oder in Trommeln oder Drehtellern, in denen das Trägergranulat gerollt wird, in perforierten Kesseln mit kontrollierter Führung des Trocknungsmediums oder in Luf tsuspensionsverfahren. Im allgemeinen wird bei Temperaturen zwischen 10°C und 110°C gearbeitet.

Die so erhaltenen und mit der Hüllschicht versehenen fungiziden Mittel können als solche für die erfindungsgemäße Bekämpfung von Pilzen unter kontrollierter Wirkstofffreigabe verwendet werden.

Es kann jedoch auch vorteilhaft sein, auf diese Mittel von außen zusätzliche Wirkstoffe aufzutragen. Die so erhaltenen Mittel ermöglichen eine weitere Abstufung der kontrollierten Wirkstofffreigabe, wobei die außen auf der Hüllschicht aufgetragenen Wirkstoffe für eine gezieltere Anfangswirkung von Bedeutung sind. Es kann zusätzlich von Vorteil sein, noch eine zweite Hüllschicht zu verwenden, wodurch sich für die verzögerte Freisetzung der Wirkstoffe eine weitere Steuerungsmöglichkeit ergibt.

Die fungiziden Mittel beispielsweise enthalten im allgemeinen zwischen 0,01 und 15, vorzugsweise 0,1 bis 10 Gew.-% Pflanzenschutz-Wirkstoff.

Die Aufwandmengen liegen je nach Art des gewünschten Effektes zwischen 0,02 und 5 kg, vorzugsweise 0,05 und 3 kg Pflanzenschutz-Wirkstoff pro ha.

Die fungiziden Mittel zeichnen sich durch eine hervorragende Wirksamkeit gegen ein breites Spektrum von pflanzenpathogenen Pilzen, insbesondere aus der Klasse der Ascomyceten und Basidiomyceten, aus.

Besondere Bedeutung haben sie für die Bekämpfung einer Vielzahl von Pilzen an verschiedenen Kulturpflanzen wie Getreide, z.B. Weizen, Roggen, Gerste, Hafer, Reis, Raps, Zuckerrüben, Mais, Soja, Kaffee, Zuckerrohr, Zierpflanzen und Gemüsepf lanzen wie Gurken, Bohnen, Kartoffeln und Kürbisgewächsen. Mit besonderem Vorteil werden die erfindungsgemäß hergestellten Fungizide zur Pilzbekämpfung an Getreide verwendet.

Die Anwendung der Mittel erfolgt zweckmäßig in der Weise, daß man das Mittel im Boden, auf das im Boden ausgebrachte Saatgut oder auf sich daraus entwickelnden Pflanzen bzw. auf Sämlinge einwirken läßt. Das Ausbringen des Mittels und das Ausbringen des Saatguts bzw. das Einpflanzen der Sämlinge kann in getrennten Arbeitsgängen erfolgen, wobei das Ausbringen des Mittels vor oder nach dem Ausbringen des Saatguts bzw. dem Einpflanzen der Sämlinge erfolgen kann.

Es ist besonders vorteilhaft, die formulierten Pflanzenschutz-Wirkstoffe zusammen mit dem Saatgut bzw. dem Einpflanzen der Sämlinge auszubringen.

Die nachfolgenden Beispiele veranschaulichen die Erfindung.

### Allgemeine Methode

### Herstellung von kontrolliert freisetzenden Granulaten

Die Granulate wurden in drei unterschiedlichen Labor-Wirbelschichtanlagen hergestellt. Einer der drei Wirbelschicht-Coater ist der HKC-0,5/5 TJ der Fa. Hüttlin. Es handelt sich um eine Wirbelschicht mit einem Produktvorlagebehälter A von ca. 5 l und einem Produktvorlagebehälter B von ca. 0,5 l. Der Boden der Wirbelschicht ist mit schrägen Schlitzen versehen, so daß sich eine Rotationsströmung des Wirbelgases ergibt. Hierdurch wird eine gleichmäßige Durchmischung der Vorlage erreicht. Die große Anlage verfügt über einen Durchmesser von 300 mm und eine Höhe des Prozeßraumes von ca. 800 mm. Die Wirbelschicht verfügt über 3 Zweistoff-Düsen, die im Boden eingelassen sind. Bei der kleinen Anlage der Fa. Hüttlin hat der Behälter einen Durchmesser von 150 mm, sie verfügt über 2 Düsen. Der Durchmesser der Düsen: 0,8-1,2mm (je nach Viskosität der Dispersionsvorlage), Zerstäubungsdruck: 0,5-1,5 bar. Sekundärgasstrom: 0,3 - 1,2 bar. Die Anlage kann mit Luft oder Inertgas betrieben werden. Der dritte Wirbelschicht-Coater ist ein Eigenbaumodell mit einem Prozeßraumdurchmesser von 100 mm. Die Höhe des Prozeßraumes beträgt ca. 600 mm. Die Anlage verfügt alternativ über einen gelochten oder schräg geschlitzten Boden. Die Anlage kann mit einer Düse im Boden und einer Düse im Prozeßraum betrieben werden. Alle eingesetzten Wirbelschichtcoater (HKC 5 TJ, HKC 05 TJ und das Eigenbaumodell) können mit axialen Gasgeschwindigkeiten bis zu 1,9 m/s und Gastemperaturen bis zu 120°C betrieben werden.

Für die Versuche wurden Ansätze von ca. 200 - 4000 g hergestellt. Zunächst wird die Granulatvorlage eingefüllt.

Es wurden beispielsweise folgende Granulatvorlagen getestet:
a) Wasserlösliche Granulate
   Rasenfloranid® (Fa. Compo, Münster) Dünger: 0,7-2 mm Durchmesser, diverse Fraktionen
   Nitrophos® NP 20/20 (Fa. BASF AG, Ludwigshafen) Dünger: 2-4 mm Durchmesser, div. Fraktionen
   geprillter Harnstoff: 0,5-3 mm Durchmesser der Prills, div. Fraktionen
b) Unlösliche Granulate
   Sand: 0,3 - 0,8 mm, mittlere Größe: 0,6 mm
   Sand: 0,6 -1,2 mm, mittlere Größe: 0,85 mm
   Bimsstein: ca. 0,4 -1 mm
   Kalkstein: ca. 0,6 - 1,5 mm
c) Biologisch abbaubare, saugfähige Granulate
   Granulate aus Papierpulpe: 0,3 - 0,9 mm Durchmesser
   Maisschrot: ca. 1,5 - 3 mm Durchmesser
   Maisstroh (Corn-Cob): 0,5 -1,25 mm Durchmesser, diverse
   Fraktionen

Die Granulate werden mit dem Wirbelgas fluidisiert und erwärmt auf ca. 35-40°C. Dann wird eine Suspension bzw. Lösung, die 1-6 Wirkstoffe enthalten kann, aufgesprüht.

Es gibt 3 Möglichkeiten zum Aufsprühen:
1. Wirkstoffe werden als erste Schicht auf den Träger gesprüht, danach folgt die Polymerschicht. Hierbei können gegebenenfalls nicht mischbare Wirkstoffformulierungen aus je einer der 3 Düsen versprüht werden.
2. Wirkstoffe werden mit einem Teil des Filmbildners abgemischt bzw. wird ein Teil des Filmbildners innerhalb der ersten 25-50% der Schicht mit Wirkstoffen aus verschiedenen Düsen, jedoch gleichzeitig versprüht.
3. Wirkstoffe werden mit dem Filmbildner während des gesamten Schichtaufbaus aus getrennten Düsen gleichzeitig versprüht.

Die Gasmenge wird beim Sprühvorgang so hoch eingestellt, daß die Granulate intensiv bewegt werden.

In den Beispielen wurden die folgenden Verbindungen eingesetzt:
Verbindung 1:Fenpropimorph
   (±)-cis-4-[3-(4-tert-butylphenyl)-2-methylpropyl]-2,6-dimethylmorpholin
Verbindung 2:
   1-(4-Chlorphenyl)-3-(2-(methoxymethoxycarbonylamino)-benzyl)-imidazol
Verbindung 3:
   2-[2-(2-Isopropoxy-2-(Z)-methoxyimino-1-methyl-(E)-ethylidenaminooxymethyl)-phenyl]-2-(E)-methoxyimino-N-methyl-acetamid
Verbindung 4:
   (E)-2-Methoxyimino-2-{2-[(2,5-dimethyl-phenyl)-oxymethyl]phenyl}-N-methylessigsäureamid
Verbindung 5:Bion
   1,2,3-Benzthiadiazol-7-carboxylicacid-S-methyl-thioester
Verbindung 6:Epoxiconazol
   (2RS,3SR)-1-[3-(2-Chlorphenyl)-2,3-epoxy-2-(4-fluorphenyl)propyl]-1H-1,2,4-triazol
Verbindung 7:Acetylsalicylsäure
Verbindung 8:Juwel®( Kresoxim-methyl und Epoxiconazol)
   (Methyl-methoxyimino-α-(o-tolyloxy)-o-tolylacetat und (2RS,3SR)-1-[3-(2-Chlorphenyl)-2,3-epoxy-2-(4-fluorphenyl)propyl]-1H-1,2,4-triazol)
Verbindung 9: Opus® Top
Epoxiconazol und Fenpropimorph

### Die Apparatur zur Elution von Granulaten

In der Anlage wird die verzögerte Abgabe von wirkstoffen oder Salzen aus Controlled Release (CR) -Formulierungen bestimmt. In einem zylindrischen Gefäß befindet sich am unteren Rand eine Fritte, auf welche die zu testenden Granulate gelegt werden. Unterhalb der Fritte befindet sich ein S-förmiger Ablauf, der bewirkt, daß Flüssigkeit aus dem Zylinder erst ablaufen kann, wenn der Füllstand über 80% liegt. Mittels einer Schlauchpumpe wird Wasser (ggf. mit Netzmittel) durch die CR-Formulierungen in einem zylindrischen Vorlagegefäß (ca. 100 ml Volumen) gepumpt, derart, daß die Vorlage komplett mit Wasser umspült wird. Das durchfließende Wasser wird in Auffanggefäßen gesammelt. Über eine Zeitschaltuhr erfolgt ein Wechsel der Auffanggefäße, um einen zeitlichen Verlauf der Abgabe von Wirkstoffen zu ermitteln. Die Vorlagegefäße sind in einem temperierten Wasserbad installiert, so daß die Elution generell unter vergleichbaren Bedingungen abläuft. Sofern keine Elutionstemperaturen angegeben sind, wurde eine Badtemperatur von 30°C eingestellt.

Die Elutionsanlage läuft im Betrieb mit der Programmsteuerung täglich 24 h. Eine Elution dauert 24 h, während dieser Zeit werden ca. 4000 ml Flüssigkeit durch die Vorlage gepumpt und in Auffanggefäßen gesammelt. Mittels HPLC oder GC wird der Wirkstoffgehalt in dem Eluat bestimmt. Anhand der Vorlagen kann überprüft werden, ob die Freisetzung gleichmäßig erfolgt. Der Summenwert liefert eine Vergleichsgröße zur Überprüfung der Dichtheit der Granulate.

### Beispiel 1 - Vergleichsbeispiel

Muster, die nach EP-A 0 734 204 hergestellt wurden, führten bei phytotoxischen Wirkstoffen wie beispielsweise Verbindungen 1, 6 und 5 zu Pflanzenschäden. Die meisten der genannten Substanzen führen bei hoher Konzentration zu Schäden, was auch die in Tabelle 2 angeführten Beizversuche mit Verbindungen 6 und 3 belegen. Durch CR (controlled release) Granulate gemäß Formulierung 1-5 kann den Pflanzen eine deutlich höhere Konzentration über einen längeren Zeitraum verabreicht werden, siehe Verbindung 6: 125 g/ha anstelle von 4 g/ha. Dennoch sind auch bei Proben, die gemäß EP-A 0 734 204 hergestellt wurden, Pflanzenschäden zu beobachten.

Herstellung: siehe Beispiel 2, Seite 29.

Die Proben wurden nach dem in EP-A 0 734 204 beschriebenen Verfahren mit der Hüllsubstanz G beschichtet.

Ausdünnung: 100 % Verlust bedeutet kein Wachstum nach Aussaat.

Auslaufverzögerung: 100 % Auslaufverzögerung bedeutet kein Wachstum nach Aussaat.

Die Ergebnisse zeigen deutlich, daß sämtliche Formulierungen zur Schädigung der behandelten Pflanze führen.

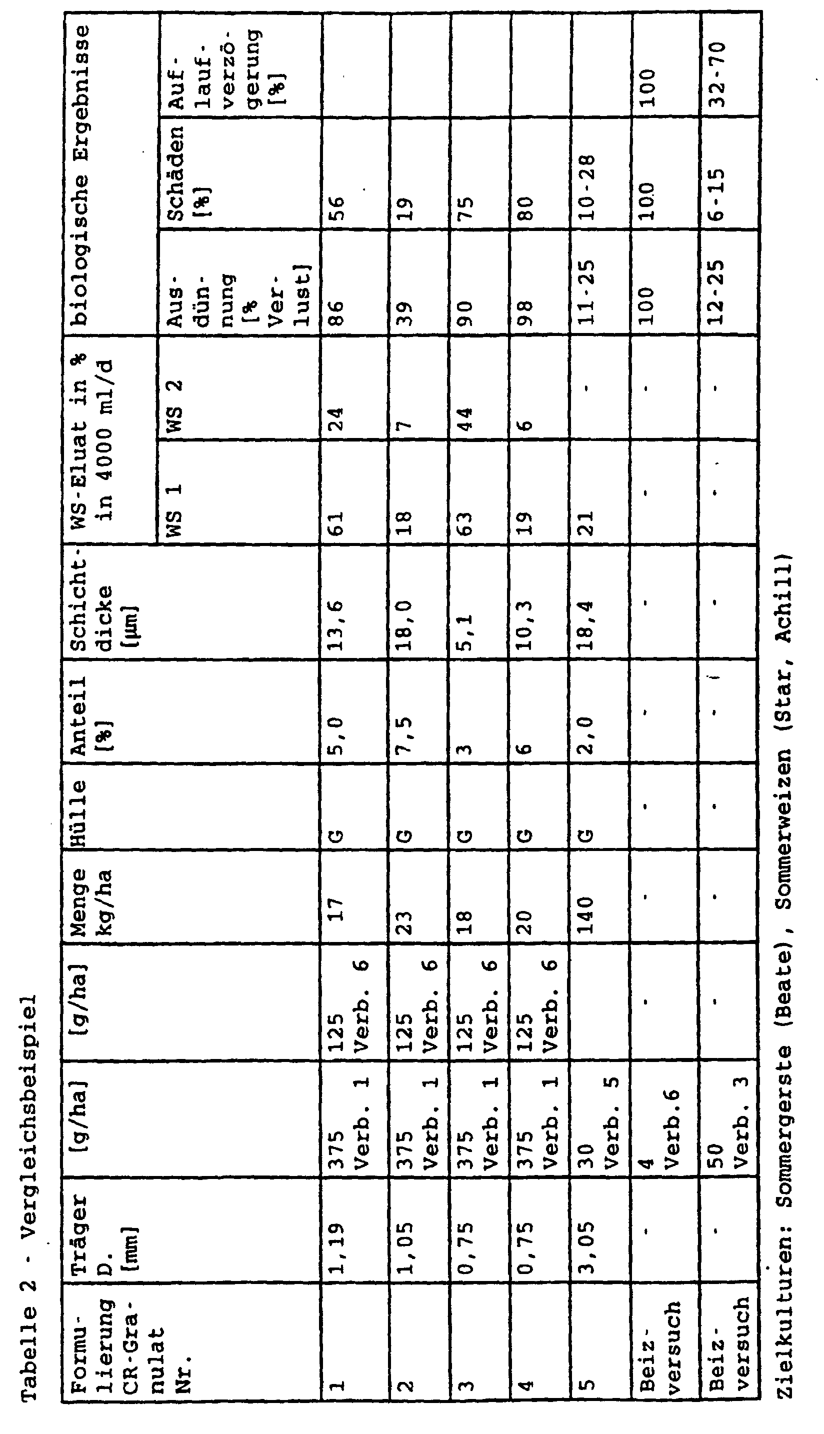

### Beispiel 2 - Vergleichsbeispiel

Tabelle 3 zeigt Ertrags- und Befallsboniturwerte von Produktmustern, die gemäß folgender Beschreibung hergestellt und an Sommerweizen geprüft wurden.
a) Der Wirkstoff Epoxiconazol wurde in Form eines Suspensionskonzentrates folgender Zusammensetzung verarbeitet:

| | |
|---|---|
| 500 g/l | Epoxiconazol, |
| | |
| 30 g/l | eines Blockpolymerisats mit Polypropylenoxidkern der ungefähren Molmasse 3250, auf den bis zu einem Molekulargewicht von ungefähr 6500 Ethylenoxid aufgepropft ist als Dispergiermittel (Fa. BASF, Deutschland), |
| | |
| 20 g/l | eines Natriumsalzes eines Kondensationsproduktes aus Phenolsulfonsäure, Harnstoff und Formaldehyd als Dispergiermittel (Fa. BASF, Deutschland) und |

die Differenz zu 1 l Wasser. Die in den folgenden Beispielen verwendeten flüssigen Zubereitungen des Epoxiconazol wurden durch Verdünnen dieses Suspensionskonzentrates mit der entsprechenden Menge Wasser erhalten.
b) Der Wirkstoff Fenpropimorph wurde als Öl-in-Wasser-Emulsion folgender Zusammensetzung verarbeitet:

| | |
|---|---|
| 200 g/l | Fenpropimorph, |
| | |
| 37 g/l | eines mit 8 Ethylenoxideinheiten veretherten p-Isononylphenols als Emulgator (Fa. BASF, Deutschland), |
| | |
| 87,5 g/l | eines 1:1-Gemisches (Gewicht) aus 2-Ethylhexansäure und einem mit 7 Ethylenoxideinheiten veretherten p-Isononylphenol als Emulgator (Fa. BASF, Deutschland) und |

die Differenz zu 1 l Wasser.

Herstellung: 3000 g Rasenfloranid wurden als Träger in der Wirbelschicht vorgelegt. Das Granulat wurde durch einen auf 50°C temperierten Gasstrom von 250-280 m³/h auf ca. 35-36°C vorgewärmt.

Über 3 Düsen wurde die Wirkstoffsuspension (450 g) mit einer Rate von 24 g/min auf den Träger aufgesprüht. Der Druck in der Zweistoffdüse betrug hierbei 0,8 bar, zur besseren Zerstäubung wurde ein Sekundärgasstrom bei ebenfalls 0,8 bar angelegt.
Nach dem Aufsprühen der Wirkstoffe wurde das Hüllpolymer mit einer Sprührate von 25-30 g/min aufgebracht. Bei Sprühen des Polymers wurde die Zulufttemperatur des Gasstroms (280 m³/h) auf 40°C gesenkt, die sich einstellende Produkttemperatur betrug 28°C. Das Polymer wurde als wässrige Dispersion mit 25 % Feststoffanteil verarbeitet.

Die mit den CR-Granulaten behandelten Flächen zeigen gegenüber der unbehandelten Parzelle deutlich geringeren Befall und eine Erhöhung der relativen Erträge. Die Probe 3 hatte eine hohe Anfangsfreisetzungsrate der Wirkstoffe, was zu phytotoxischen Schäden beim Auflaufen der Pflanzen führte. Aufgrund der schnellen Wirkstofffreisetzung war die Langzeitwirkung dieser Probe zu gering, so daß gegenüber der unbehandelten Probe nur geringe Wirkung zu erkennen war.

**Tabelle 3 :**

| Versuche an Sommerweizen Star | | | | | | | | |
|---|---|---|---|---|---|---|---|---|
| Formulierung | Träger | Wirkstoff | Aufwandmenge [g/ha ] | Hüllanteil | Erysiphe graminis | Leptosphaeria | rel. Ertrag | Ertrag dt/ha |
| | | | | | Befallsrate in % | | | |
| | | Unbeh. | 0 | | 16 | 25 | 100 | 62 |
| 1 | Rasenfloranid | Verb. 1 Verb. 6 | 375 125 | 6% | 9 | 18 | 104 | |
| 2 | Rasenfloranid | Verb. 1 Verb. 6 | 375 125 | 6% | 9 | 18 | 103 | |
| 3 | Rasenfloranid | Verb. 1 Verb. 6 | 375 125 | 3% | 10 | 22 | 97 | |
| 4 | Rasenfloranid | Verb. 1 Verb. 6 | 375 125 | 4% | 9 | 17 | 105 | |
| | 2fach Spritzung mit Verb. 9 | | 1000 | | 6 | 9 | 112 | |

### Beispiel 3:

In einem Rührgefäß werden 200 g Vinylacetat in 800 ml Wasser emulgiert. Die Dispersion wurde mit einer PVP-Lösung ( K 30, 20 g Festanteil) versetzt. Die Coating Dispersion wurde in einem Hüttlin Kugel Coater (HKC 5) auf ein Trägergranulat aufgetragen.

Als Trägergranulat wurden 4000 g Düngerpellets mit einem mittleren Durchmesser von 1,25 mm eingesetzt. Das Trägergranulat wurde in dem HKC 5 vorgewärmt bis 40 ° C Produkttemperatur, dann wurde ein Gemisch einer 20%-igen Fenpropimorph Emulsion (36,7g Wirkstoff) und einer 45%-igen Epoxiconazol Suspension (5,7 g Wirkstoff) auf das Granulat aufgesprüht.

Auf das mit den Wirkstoffen Epoxiconazol und Fenpropimorph beschichtete Trägergranulat wurde die Polymerdispersion als Hülle aufgetragen.

Der Coatingprozeß wurde unter folgenden Bedingungen durchgeführt:

**Tabelle 4**

| | |
|---|---|
| 3 Düsen (Dreistoffdüsen) | 0,8 mm |
| Einwaage an Trägergranulat | 4000 g |
| Luftmenge | 400 m³/h |
| Zulufttemperatur | 50°C |
| Produkttemperatur | 40-42°C |
| Ablufttemperatur | 37,5-40°C |
| Sprühart | kontinuierlich |
| Sprühdruck | 1 bar |
| Sprührate (für Wirkstoffe und Hüllpolymer) | 12 g/min |
| Prozeßdauer | 90 min |
| Nachtrocknungszeit bis 50°C Produkttemperatur | 15 min |

Es bildet sich ein gleichmäßig glatter Überzug aus.

Die Freisetzungsrate der Wirkstoffe wurde in obenbeschriebener Elutionsapparatur bestimmt. Hierzu wurden 30 g des Trägergranulates in ein Syphongefäß mit Fritte eingewogen. Durch das Gefäß wurde in 24 h eine Menge von 3980 g Wasser gepumpt und aufgefangen. In der aufgefangenen Flüssigkeit wurden 124 mg Fenpropimorph und 19 mg Epoxiconazol nachgewiesen.

Dieses Produkt wurde mit Getreidesaatgut (Winterweizen) ausgebracht. Im Mittel wurden pro Saatgutkorn ca. 3 fungizide Wirkstoffpellets unter der Erde abgelegt. In den wachsenden Getreidepflanzen wurde zwei Monate bzw. sechs Monate nach Ausbringung Epoxiconazol nachgewiesen. Zwei Monate nach der Aussaat konnten 0,038 mg/kg Grünmasse, sechs Monate nach der Ausbringung noch 0,022 mg/kg Grünmasse nachgewiesen werden.

Damit konnte gezeigt werden, daß eine kontrollierte Abgabe des Wirkstoffes Epoxiconazol durch die PVA+PVP Hülle über mindestens 6 Monate im Boden gewährleistet werden kann.

### Beispiel 4

Die erfindungsgemäß hergestellten Wirkstoffgranulate werden in den folgenden Tabellen beispielhaft beschrieben. In Tabelle 5 Spalte 2 ist der Granulatträger angegeben, die 3. Spalte gibt den mittleren Durchmesser des Trägergranulates in mm an. In den Spalten 4-6 sind die Wirkstoffe und ihre Aufwandmenge in g/ha enthalten, die nächsten Spalten geben die Wirkstoffkonzentrationen auf den fertigen Granulaten an (nach HPLC/GC-Analyse). Die Menge in kg/ha gibt an, welche Gesamtmenge des Granulates erforderlich ist, um die gewünschten wirkstoffmengen pro ha auszubringen.

Di Wirkstoffe wurden wie in Beispiel 2 beschrieben angesetzt. Die Betriebsbedingungen der Wirbelschichtanlage sind in Tabelle 5 + 6 beschrieben.

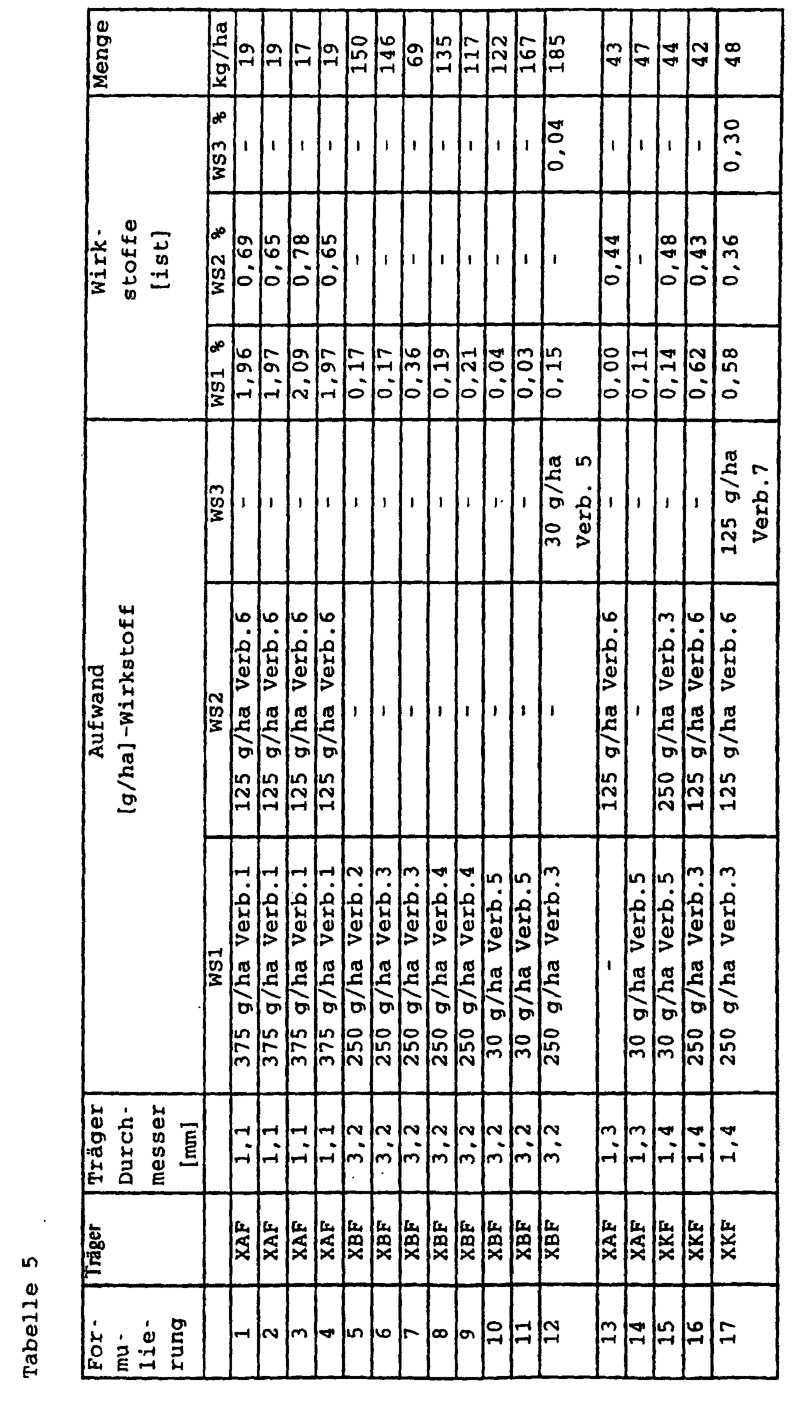

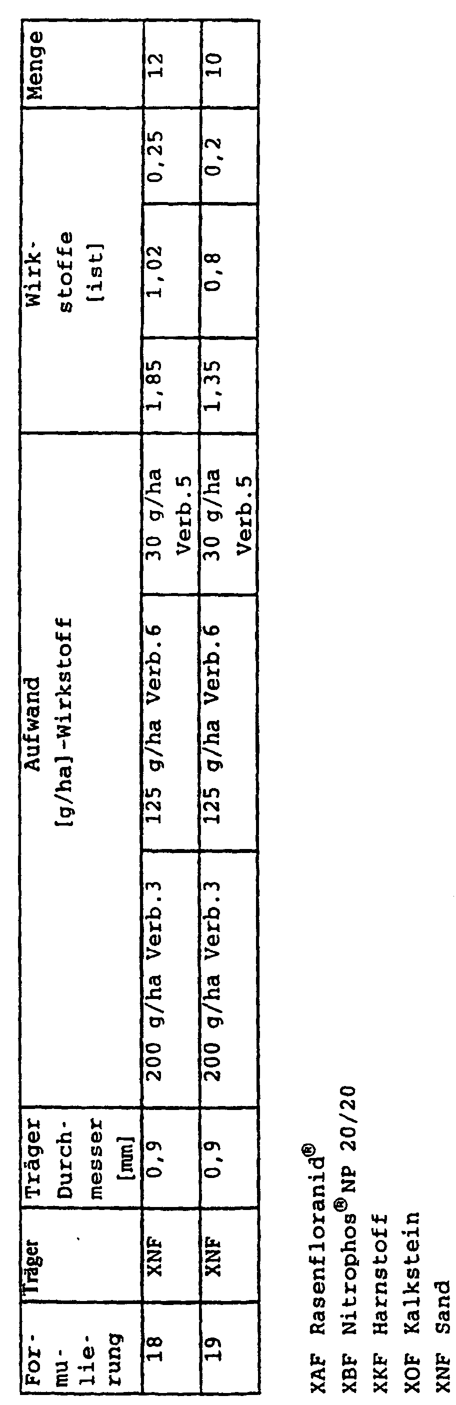

Tabelle 6 enthält die gleichen Granulate wie Tabelle 5. Zunächst wird die Hüllschicht näher beschrieben (Art, %-Anteil und Dicke). Danach wird die Wirkstoffabgabe im Eluat bei 30°C in % angegeben. In den folgenden Spalten folgen die Betriebsbedingungen beim Sprühen des Wirkstoffes und beim Sprühen der Hülle. PolymerZusammensetzung siehe Beschreibung S. 21, Wirkstoffzusammensetzung S. 24 und 25. Einige Proben wurden nachgetempert, um die Verfilmung des Hüllpolymers am Ende des Prozesses zu verbessern.

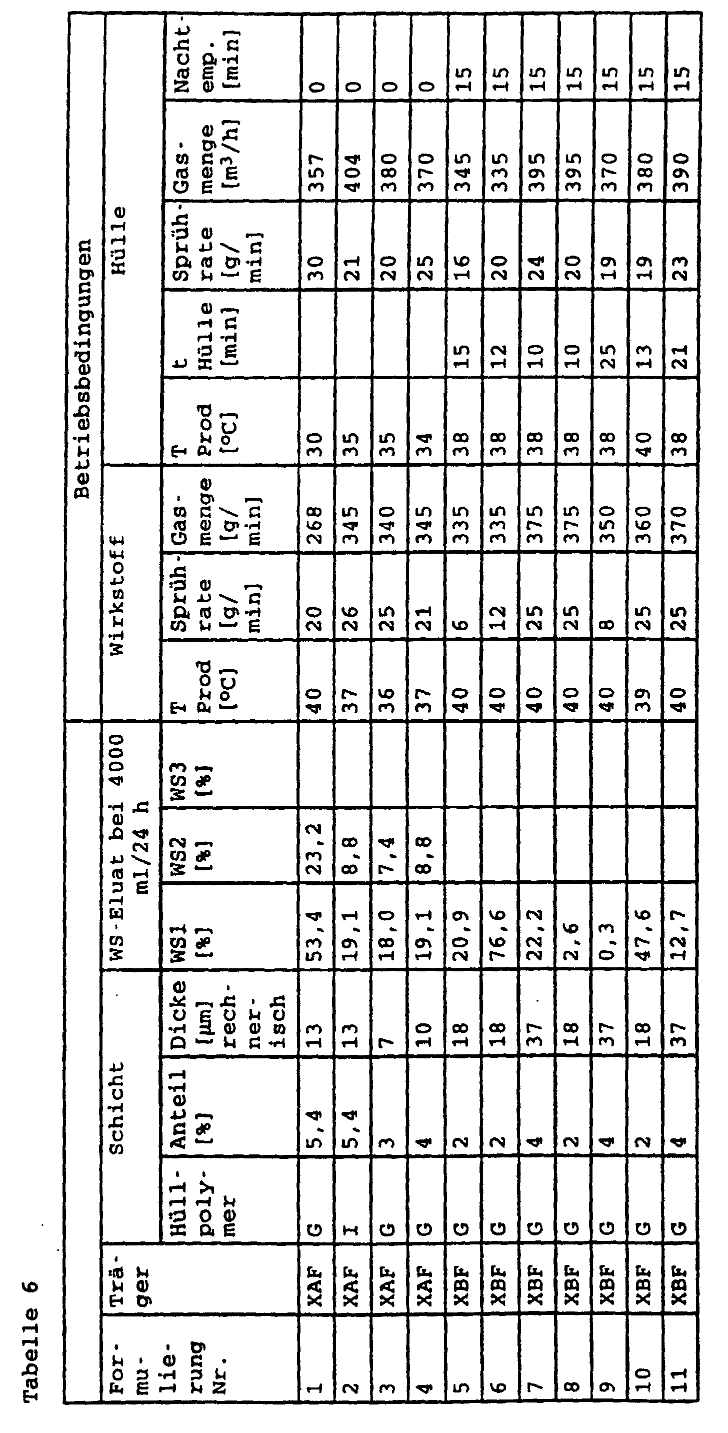

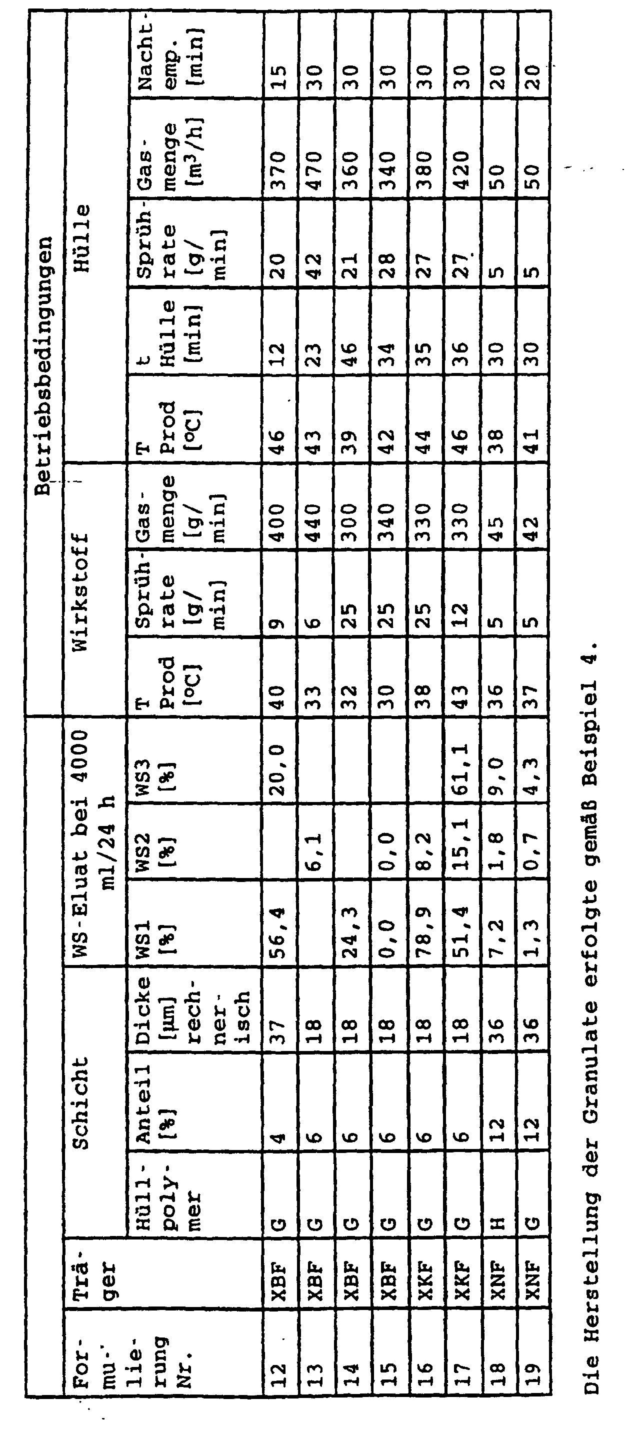

### Beispiel 5

In Tabelle 7 sind verschiedene Hüllpolymere aufgeführt, die auf ihre Eignung für kontrolliert freisetzende Granulate überprüft wurden.

Herstellung der Proben:
1) Vorlage von 3000 g Trägermaterial in der Wirbelschicht, vorwärmen auf 35°C.
2) Aufsprühen einer 40%igen Epoxiconazol Suspension, die außer wirkstoff noch Dispergier- und Netzmittel enthält.
   Sprühbedingungen: 300 m³/h Gasdurchsatz, Produkttemperatur ca. 33-36°C, Sprührate der Wirkstoffsuspension 20 ml/min
3) Aufsprühen des Polymers aus einer Dispersion, Gasdurchsatz 350-380m³/h, Produkttemp. 35-40°C, Sprührate: 20 ml/min
   Nachtempern des Polymers für 15 min bei 350 m³/h Gasdurchsatz, Produkttemp. 40°C

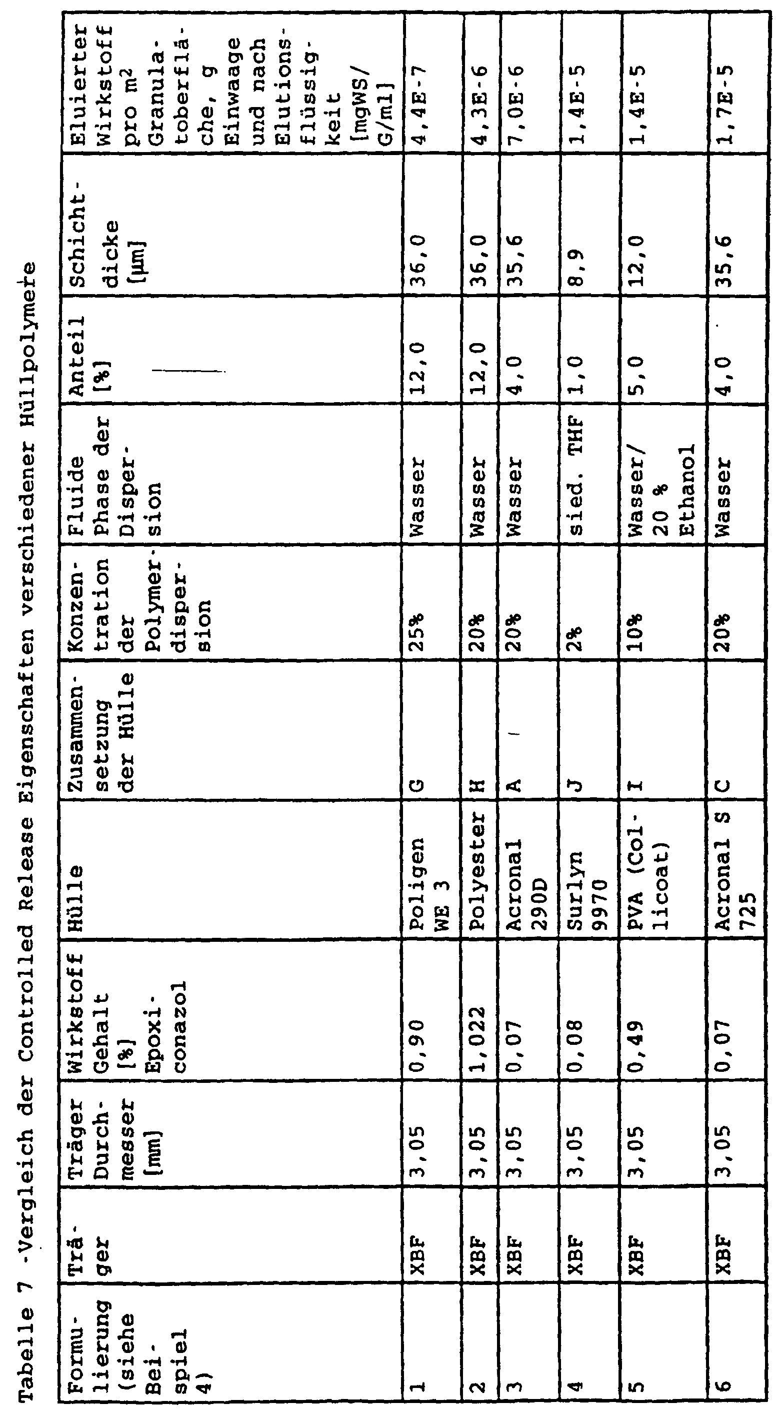

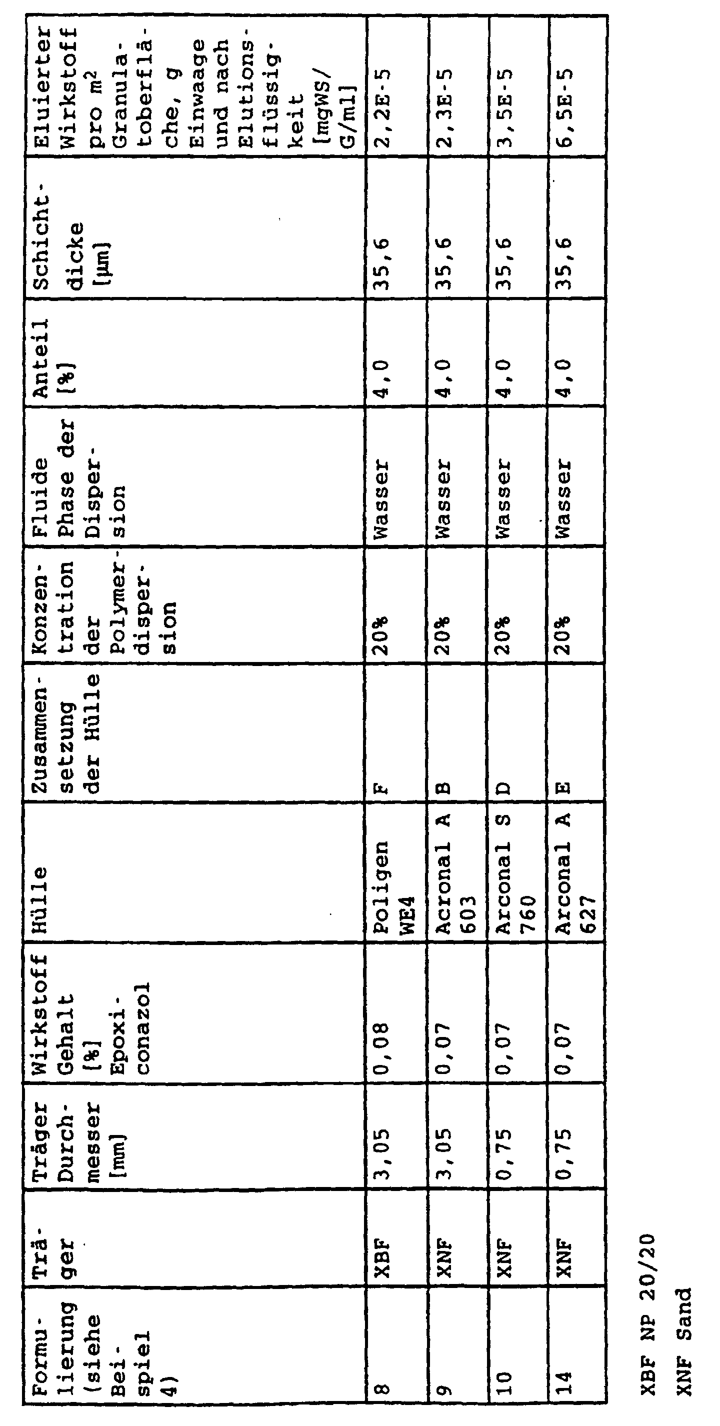

### Beispiel 6:

Die CR-Granulate enthalten systemische Strobilurine als Wirksubstanzen, die die schwache Wirksamkeit der Azole und Morpholine (gemäß Tab. 3) überraschenderweise nicht zeigen. In Tabelle 8 a und b sind 2 CR-Granulatmuster mit einem Strobilurin vom Typ Oximether mit 2 und 4%-iger Umhüllung gegen eine zweimalige Spritzapplikation mit einem Strobilurin + Azol (Juwel®) in Wintergerste getestet worden.

Die CR-Granulate (Basis: Nitrophos® NP 20/20) zeigen beide eine Wirkungsdauer von 8 Monaten und eine deutliche Befallsreduktion, die sich in einem vergleichbaren Ertrag wie bei der mit Spritzung behandelten Fläche niederschlägt. Die Probe mit der dünneren Hüllschicht erwies sich als weniger effizient kurz vor der Ernte, weshalb hier auch die Ertragseinbuße von 7% gegenüber der CR-Probe mit dickerer Hülle zu verzeichnen ist. Besonders beachtenswert ist die Tatsache, daß vergleichbare biologische Ergebnisse mit deutlich geringerer Wirkstoffaufwandmenge im Vergleich zur Spritzung zu erzielen sind.

**Tabelle 8a:**

| Versuche an Wintergerste Danilo | | | | | | | |
|---|---|---|---|---|---|---|---|
| Formulierung (siehe Beispiel 4) | Träger | Wirkstoff | Aufwandmenge [g/ha] | Hüllanteil | Rhynchosporium | Ertrag rel. | Ertrag dt/ha |
| | | | | | Befallsrate in [%] | | |
| | | Unbeh. | 0 | | 14 | 100 | 62,4 |
| 6 | NP 20/20 | Verb. 3 | 250 | 2 % | 6 | 122 | |
| 7 | NP 20/20 | Verb. 3 | 250 | 4 % | 2 | 129 | |
| | 2fach Spritzung mit Verb. 8 | | 500 | | 0 | 132 | |

**Tabelle 8b:**

| Versuche an Wintergerste Noveta | | | | | | | |
|---|---|---|---|---|---|---|---|
| Formulierung (siehe Beispiel 4) | Träger | Wirkstoff | Aufwandmenge [g/ha] | Hüllanteil | Pyrenophora | Ertrag rel. | Ertrag dt/ha |
| | | | | | Befallsrate in [%] | | |
| | | Unbeh. | 0 | | 19 | 100 | 72,5 |
| 6 | NP 20/20 | Verb. 3 | 250 | 2 % | 11 | 116 | |
| 7 | N P 20/20 | Verb. 3 | 250 | 4 % | 5 | 125 | |
| | 2fach Spritzung mit Verb. 8 | | 500 | | 0 | 129 | |

### Beispiel 7

Die Wirkung des Strobilurins kann nochmals deutlich gesteigert werden, wenn mehrere Wirkstoffe miteinander kombiniert werden, was aus Anti-Resistenz-Gründen erwägenswert ist. In Tabelle 9a und b sind die Bonitur- und Ertragsergebnisse einer Mischung aus verschiedenen CR-Granulaten mit der Spritzbehandlung verglichen. Getestet wurden Granulate mit dem gleichen Strobilurin-Typ wie in Tabelle 8 a und b, kombiniert mit Granulaten, die einen systemischen Resistenz-Induktor (Bion®) enthielten mit einem weiteren Wirkstoff.

**Tabelle 9a:**

| Versuche an Wintergerste Danilo | | | | | | | | |
|---|---|---|---|---|---|---|---|---|
| Formulierung (siehe Beispiel 4) | Träger | Wirkstoff | Aufwandmenge [g/ha] | Hüllanteil | Rhynchosporium | Puccinia | rel. Ertrag | dt/ha |
| | | | | | Befallsrate in [%] | | | |
| | | Unbeh. | 0 | | 25 | 3 | 100 | 70,9 |
| 8 6 10 | NP 20/20 | Verb. 4 Verb. 3 Verb. 5 | 250 250 30 | 2 % | 3 | 1 | 146 | |
| | 2fach Spritzung | Verb. 8 | 500 | | 0 | 0 | 149 | |

**Tabelle 9b:**

| Versuche an Wintergerste Noveta | | | | | | | |
|---|---|---|---|---|---|---|---|
| Formulierung (siehe Beispiel 4 | Träger | Wirkstoff | Aufwandmenge [g/ha] | Hüllanteil | Pyrenophora | rel. Ertrag | Ertrag dt/ha |
| | | | | | Befallsrate in [%] | | |
| | | Unbeh. | 0 | | 22 | 100 | 61,7 |
| 8 6 10 | NP 20/20 | Verb. 4 Verb. 3 Verb. 5 | 250 250 30 | 2 % | 5 | 128 | |
| | 2fach Spritzung | Verb. 8 | 500 | | 1 | 125 | |

### Beispiel 8

In Tabelle 10 sind die CR-Granulatformulierungen aus Tabelle 8 bei Winterweizen getestet. In Ergänzung zu den CR-Granulaten mit. einem Wirkstoff und der Mischung von Granulaten verschiedener Wirkstoffe (Tab. 9) ist hier noch eine Formulierung enthalten, welche zwei Wirkstoffe auf einem Granulat enthält.

**Tabelle 10:**

| Versuche an Winterweizen Frühgold | | | | | | | | |
|---|---|---|---|---|---|---|---|---|
| Formulierung (siehe Beispiel 4) | Träger | Wirkstoff | Aufwandmenge [g/ha] | Hüllanteil | Erysiphe graminis | Leptosphaeria | Ertrag rel. | Ertrag dt/ha |
| | | | | | Befallsrate in [%] | | | |
| | | Unbeh. | 0 | | 11 | 63 | 100 | 53,3 |
| 6 | NP 20/20 | Verb. 3 | 250 | 2 % | 5 | 40 | 108 | |
| 7 | NP 20/20 | Verb. 3 | 250 | 4 % | 4 | 31 | 120 | |
| 12 | NP 20/20 | Verb. 3 Verb.5 | 250 30 | 4% | 2 | 24 | 132 | |
| | 2fach Spritzung | Verb. 8 | 500 | | 0 | 2 | 140 | |

Bei dem länger wachsenden Winterweizen ist zu erkennen, daß die Probe mit der dickeren Hüllschicht bessere biologische Ergebnisse zeigt, die Probe mit zwei Wirkstoffen zeigt überraschenderweise einen synergistischen Effekt, der über die Mischung der einzelnen Wirkstoffgranulate gemäß Tabelle 9 hinausgeht.

### Beispiel 9

Der synergistische Effekt ist nochmals ganz deutlich in Tabelle 11 an Winterweizen gezeigt. Hier wurden CR-Granulate mit verschiedenen Wirkstoffen gemischt (2 bzw. 3 Einzelgranulate).

Das Produkt mit der Fertigmischung auf einem Granulat zeigte deutlich bessere Wirksamkeit als die gemischten Granulate (siehe Formulierung Nr. 7, Nr. 9, Nr. 11 und Nr. 12, Beispiel 4).

**Tabelle 11:**

| Versuche an Winterweizen Kanzler | | | | | | | | |
|---|---|---|---|---|---|---|---|---|
| Formulierung (siehe Beispiel 4) | Träger | Wirkstoff | Aufwandmenge [g/ha] | Hüllanteil | Erysiphe graminis | Leptosphaeria | Ertrag rel. | Ertrag dt/ha |
| | | | | | Befallsrate in % | | | |
| | | Unbeh. | 0 | | 11 | 32 | 100 | 62,3 |
| 7 9 | NP 20/20 | Verb. 4 Verb.3 | 250 250 | 4% | 8 | 18 | 112 | |
| 7 9 11 | NP 20/20 | Verb. 4 Verb.3 Verb. 5 | 250 250 30 | 4 % | 3 | 9 | 114 | |
| 12 | NP 20/20 | Verb. 3 Verb. 5 | 250 30 | 4 % | 4 | 12 | 121 | |
| | 2fach-Spritzung | Verb. 8 | 500 | | 0 | 3 | 126 | |

### Beispiel 10

In Tabelle 12 werden diese über-synergistischen Effekte mit mehr als einem Wirkstoff auf einem Granulat im Vergleich zu Granulatmischungen nochmals an Sommerweizen gezeigt. Als Träger wurden hier Harnstoff und Rasenfloranid Granulate eingesetzt.

**Tabelle 12:**

| Versuche an Sommerweizen Star | | | | | | |
|---|---|---|---|---|---|---|
| Formulierung (siehe Beispiel 4) | Träger | Wirkstoff | Aufwandmenge g/ha | Hüllanteil | Befallsrate in % | |
| | | | | | Erysiphe graminis | Leptosphaeria |
| | | Unbeh. | 0 | | 9 | 11 |
| 15 | Harnstoff | Verb. 3 Verb. 5 | 250 30 | 6 % | 0 | 1 |
| 16 | Harnstoff | Verb. 3 Verb. 6 | 250 125 | 6 % | 1 | 1 |
| 17 | Harnstoff | Verb. 3 Verb. 6 Verb. 7 | 250 125 125 | 6 % | 0 | 1 |
| 13 14 | Rasenf loranid | Verb. 6 Verb. 5 | 187 30 | 6 % | 3 | 2 |
| | 2fach Spritzung | Verb. 8 | 500 | | 0 | 0 |

In dieser Tabelle sind zwei Versuchskombinationen bemerkenswert. Epoxiconazol (Verb. 6.) zeigte alleine deutliche Schwächen (siehe Tabelle 3). In Kombination (2. Granulat) mit dem Stärkungsmittel Bion® (Verb. 5) ist die Wirkung von Epoxiconazol deutlich besser. Überraschenderweise zeigt in dieser Versuchsreihe Acetylsalicylsäure (Verbindung 7 )die gleichen wirkungsverbessernden Effekte wie Bion®(Verbindung 5).

### Beispiel 11

Tabelle 13 zeigt den Einfluß eines Füllstoffes im Hüllpolymer auf die Freisetzungsrate. Setzt man beispielsweise die kaltwasserlösliche Stärke C-Pur® von Ceresta als Füllstoff des Hüllpolymeren ein, so steigt die Freisetzungsrate mit zunehmendem Anteil an Füllstoff deutlich an.

**Tabelle 13**

| Wirkstoff | Hüllanteil | Füllmenge | Freisetzungsrate bei 4000 ml in 24 h bei 40°C |
|---|---|---|---|
| Epoxiconazol | 4 % | 0 % | 2,70 % |
| Epoxiconazol | 4 % | 10 % | 3,30 % |
| Epoxiconazol | 4 % | 20 % | 7,15 % |

Die Granulate wurden nach der in Beispiel 4 beschriebenen Methode hergestellt.

Chargengröße: 600 g, Zulufttemperatur: 45°C, Produkttemperatur: 39°C, Gasgeschwindigkeit: 1,8 m/sec

### Beispiel 12

Tabelle 14 zeigt, wie die Freisetzungsrate durch die Prozessführung der Wirbelschichttrocknung beeinflußt wird. Speziell die zugeführte Wärmemenge hat deutlichen Einfluß auf die Auslaugeigenschaften. Je mehr Wärmeenergie bei ansonsten konstanten Bedingungen zugeführt wird, desto geringer ist die Freisetzungsrate bei gleichdicker Polymerschicht. Eine Verdopplung der zugeführten Energie führt zu einer Reduktion der Mikroporosität des Polymerfilms auf ca. 1/10, was durch die Freisetzungsrate gezeigt wird.

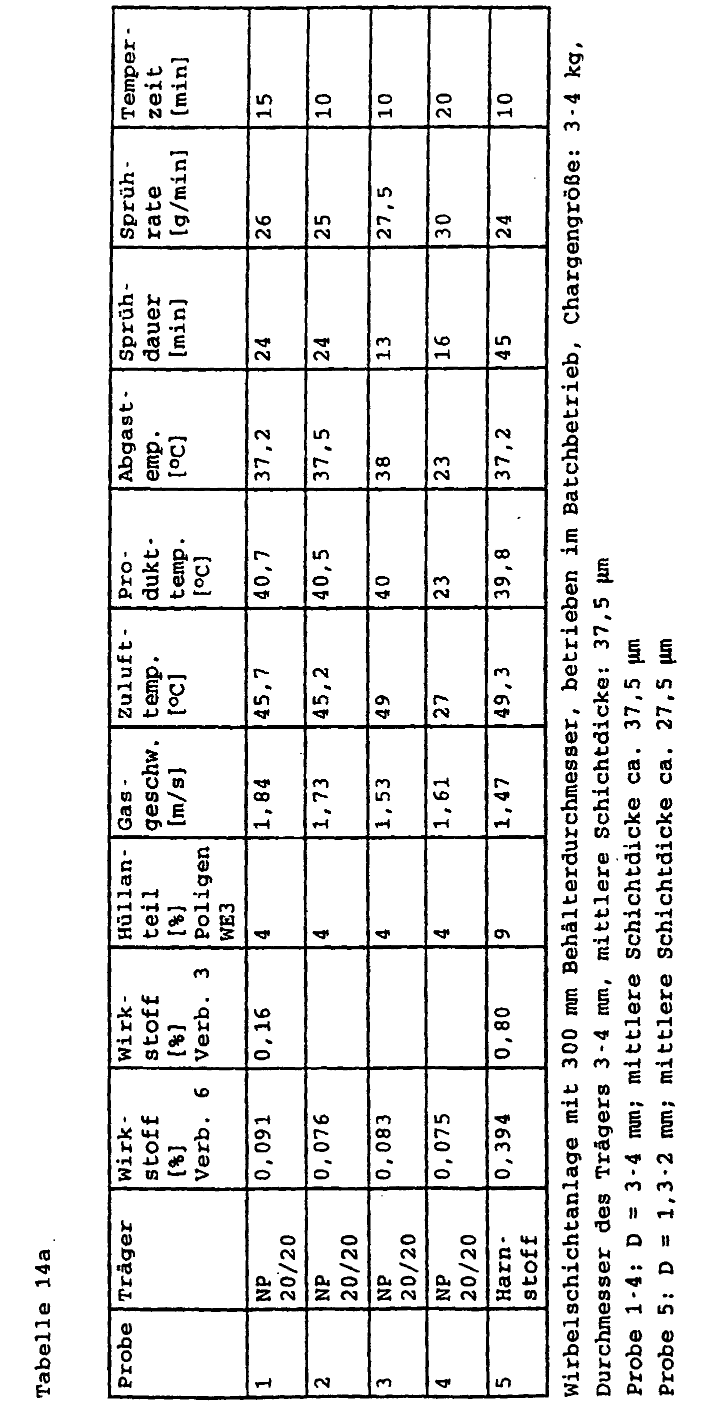

**Tabelle 14 b -**

| Auslaugrate und zugeführte Wärmemenge bei Proben der Tabelle 14a | | | | |
|---|---|---|---|---|
| Probe | Auslaugrate [% der eingesetzten Menge in 4000 ml pro 24 h bei 30°C] | | zugef. Wärmemenge [kJ/kg] | zugef.-Wärmemenge [kJ/kg Polymeranteil] |
| | Verb. 6 | Verb. 3 | | |
| 1 | 2,1 | 4,9 | 653 | 16.322 |
| 2 | 9,8 | | 517 | 12.927 |
| 3 | 14,9 | | 475 | 11.864 |
| 4 | 19,1 | | 331 | 8.282 |
| 5 | 3,2 | 8,02 | 1400 | 15.139 |

Die zugeführte Wärmemenge in kJ/kg wird berechnet aus folgenden Daten:
- Q=: ΔT * V * t * Cₚ/m Qₚₒₗ=ΔT*V*t*Cₚ/m_{Polymer}
- ΔT=: Zulufttemp.-Abgastemp. (Gastemperatur am Geräteeinlass - Gastemp. am Auslass)
- V=: Volumenstrom des Gases, berechnet aus der Gasgeschwindigkeit
- Cₚ=: Gas-Konstante
- t=: Gesamte Verweilzeit der Probe (Sprühdauer des Hüllpolymers + Nachtemperzeit)
- m=: Ansatzgröße in kg
- m_{Polymer}=: Menge des Polymers im Ansatz

**Tabelle 14c -**

| | | |
|---|---|---|
| Granulatproben 1 und 5 der Tabelle 14a + b wurden in Erde eingegraben. Nach 6 Monaten wurden die Proben auf den Restwirkstoffgehalt untersucht. | | |

| Langzeitversuch im Freiland | | |
|---|---|---|
| Probe | Auslaugrate [% der ursprünglich eingesetzten Menge nach 6 Monaten] | |
| | Verb. 6 | Verb. 3 |
| 1 | 12 | 17 |
| 5 | 35 | 45 |

## Patentansprüche

1. CR-Bodengranulate, erhältlich durch Aufbringung einer wirkstoffhaltigen Hülle auf einen festen Träger in der Wirbelschicht bei einer definiert einstellbaren Wärmezufuhr von 6.000 bis 25,000 kJ/kg Hüllpolymeranteil, wobei die Hülle wenigstens ein unter Butylacrylat-Styrol-Copolymeren, Copolymerdispersionen aus Acryl- und Methacrylsäureestern, Polyethylenwachsemulsionen, aus Einheiten von 50 mol-% Dimethylterephtalat + ca. 50 mol-% Adipinsäure + 150 mol-% 1,4-Butandiol aufgebauten Polyestern und Ethylenmethacrylsäure-Zinksalz ausgewähltes Hüllpolymer enthält.

2. CR-Bodengranulate nach Anspruch 1 enthaltend eine wirkstoffhaltige Hülle aus
| | |
|---|---|
| 0,1-25 Gew.-% | eines oder mehrerer Wirkstoffe |
| 1-40 Gew.-% | eines oder mehrerer Hüllpolymere |
| 0-60 Gew.-% | eines oder mehrerer Additive |
wobei die Summe der Gew.-% der Verbindungen in der Hülle gleich 100 Gew.-% ist.

3. CR-Bodengranulate nach Anspruch 1 oder 2, erhältlich durch Aufbringen einer wässrigen Polyethylenwachsdispersion enthaltend, bezogen auf die wässrige Wachsdispersion, 5-40 Gew.-% eines Ethylencopolymerisatwachses, bestehend aus 10-25 Gew.-% einer α-olefinisch ungesättigten Mono- oder Dicarbonsäure mit 3-8 C-Atomen und 90-75 Gew.-% Ethylen mit einem MFI-Wert, gemessen bei 190 °C und 2,16 kp Belastung, von 1-600 oder einem MFI-Wert, gemessen bei 160 °C und 325 p, von 1-600, 0,1-5 Gew.-% Alkalihydroxid, Ammoniak, einem Alkanolamin oder Dialkanolamin und ihren Mischungen und als Rest Wasser zu 100 Gew.-%.

4. CR-Bodengranulate nach Anspruch 1 enthaltend als Hüllpolymer mindestens eines aus der Gruppe der biologisch abbaubaren Polyester.

5. CR-Bodengranulate nach Anspruch 1 enthaltend als Wirkstoff mindestens eine fungizide Verbindung der Formel I aus der Klasse der Strobilurine. 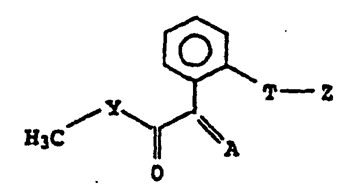 in der die Substituenten die folgende Bedeutung haben:
A NOCH₃, CHOCH₃, CHCH₃;
Y O, NH;
T Sauerstoff oder Oxymethylen
Z eine Gruppe X, N=C (R¹) W oder N=C (R¹) -C(R²)=NOR³
X ggf. subst. Heterocyclyl, ggf. subst. Aryl, ggf. subst. Hetaryl;
W ggf. subst . Alkyl, ggf. subst. Alkenyl. ggf. subst. Alkinyl, ggf. subst. Cycloalkyl, ggf. subst. Cycloalkenyl, ggf. subst. Heterocyclyl, ggf. subst. Aryl oder ggf. subst. Hetaryl;
R¹ Wasserstoff, Cyano, C₁-C₄-Alkyl, C₁-C₄-Halogenalkyl, C₁-C₄-Alkoxy, C₁-C₄-Alkoxy-C₁-C₄-alkyl, C₃-C₆-Cycloalkyl;
R² Wasserstoff, Cyano, Halogen, C(R^{d})=NOR³ oder W, OW, SW oder NR^{c}W, wobei
R^{c} Wasserstoff, Alkyl, Alkenyl oder Alkinyl;
R^{d} Wasserstoff oder Alkyl;
R³ Wasserstoff, ggf. subst. Alkyl, ggf. subst. Alkenyl oder ggf. subst. Alkinyl bedeuten,
sowie deren Salze.

6. CR-Bodengranulate nach einem der Ansprüche 1-5, enthaltend einen Wirkstoff aus der Gruppe der systemisch wirkenden Strobilurine, der Azole oder der Salicylate.

7. CR-Bodengranulate nach einem der Ansprüche 1-5, enthaltend als Wirkstoff 1,2,3-Benzthiadiazol-7-carbonsäure-S-methylthioester.

8. CR-Bodengranulate nach Anspruch 1, enthaltend als Träger ein wasserlösliches, ein wasserunlösliches oder ein biologisch abbaubares Granulat.

9. Verfahren zur Herstellung von CR-Bodengranulaten gemäß einem der Ansprüche 1-8 **dadurch gekennzeichnet, daß** auf einen Träger zunächst der Wirkstoff und anschließend die Hülle enthaltend mindestens ein Hüllpolymer und ggf. Additive in einer Wirbelschicht bei einer Wärmezufuhr von 6.000 bis 25.000 kJ/kg Hüllpolymeranteil aufgebracht werden, wobei in der Hülle durch Abrieb oder gezielte Zugabe von wasserlöslichen Additiven Mikroporen erzeugt werden.

10. Verfahren zur Bekämpfung von phytopathogenen Pilzen, unerwünschtem Pflanzenwuchs, unerwünschtem Insektenbefall und/oder zur Regulation des Wachstums von Pflanzen **dadurch gekennzeichnet, daß** man ein CR-Bodengranulat gemäß einem der Ansprüche 1 bis 9 auf Pflanzen, deren Lebensraum oder auf Saatgut einwirken läßt.

11. Verwendung der CR-Bodengranulate gemäß einem der Ansprüche 1-8 oder wie nach den Ansprüchen 9 und 10 erhalten zur Bekämpfung von phytopathogenen Pilzen, unerwünschtem Pflanzenwuchs, unerwünschtem Insektenbefall und/oder zur Regulation des Wachstums von Pflanzen.

## Claims

1. Soil-applied CR granules obtainable by applying an active-ingredient-comprising coating to a solid carrier in a fluidized bed with a defined heat input adjustable to 6000 to 25,000 kJ/kg of coating polymer, the coating comprising at least one coating polymer from amongst butyl acrylate/styrene copolymers, copolymer dispersions of acrylic and methacrylic esters, polyethylene wax emulsions, polyesters composed of the following units: 50 mol% dimethyl terephthalate + approx. 50 mol% adipic acid + 150 mol% 1,4-butanediol and ethylene/methacrylic acid zinc salt.

2. Soil-applied CR granules as claimed in claim 1 with an active-ingredient-comprising coating of
0.1-25% by weight of one or more active ingredients
1-40% by weight of one or more coating polymers
0-60% by weight of one or more additives,
the total of the % by weight of the compounds in the coating being 100% by weight.

3. Soil-applied CR granules as claimed in claim 1 or 2, obtainable by applying an aqueous polyethylene wax dispersion which comprises - based on the aqueous wax dispersion - 5-40% by weight of an ethylene copolymer wax consisting of 10-25% by weight of an α-olefinically unsaturated mono- or dicarboxylic acid with 3-8 C atoms and 90-75% by weight of ethylene with an MFI value, measured at 190°C and a load of 2.16 kp, of 1-600 or an MFI value, measured at 160°C and 325 p, of 1-600, 0.1 to 5% by weight of alkali metal hydroxide, ammonia, an alkanolamine or a dialkanolamine and mixtures of these, and, as remainder, water to 100% by weight.

4. Soil-applied CR granules as claimed in claim 1 comprising, as coating polymer, at least one from amongst the group of the biodegradable polyesters.

5. Soil-applied CR granules as claimed in claim 1 comprising, as active ingredient, at least one fungicidal compound of the formula I from amongst the class of the strobilurins. 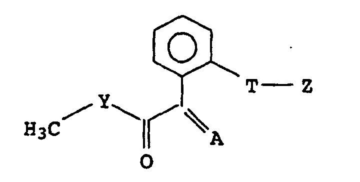 in which the substituents have the following meanings:
A is NOCH₃, CHOCH₃, CHCH₃;
Y is O, NH;
T is oxygen or oxymethylene;
Z is a group X, N=C(R¹)W or N=C(R¹)-C(R²)=NOR³;
X is unsubstituted or substituted heterocyclyl, unsubstituted or substituted aryl, unsubstituted or substituted hetaryl;
W is unsubstituted or substituted alkyl, unsubstituted or substituted alkenyl, unsubstituted or substituted alkynyl, unsubstituted or substituted cycloalkyl, unsubstituted or substituted cycloalkenyl, unsubstituted or substituted heterocyclyl, unsubstituted or substituted aryl or unsubstituted or substituted hetaryl;
R¹ is hydrogen, cyano, C₁-C₄-alkyl, C₁-C₄-haloalkyl, C₁-C₄-alkoxy, C₁-C₄-alkoxy-C₁-C₄-alkyl, C₃-C₆-cycloalkyl;
R² is hydrogen, cyano, halogen, C(R^{d})=NOR³ or W, OW, SW or NR^{c}W, where
R^{c} is hydrogen, alkyl, alkenyl or alkynyl;
R^{d} is hydrogen or alkyl;
R³ is hydrogen, unsubstituted or substituted alkyl, unsubstituted or substituted alkenyl or unsubstituted or substituted alkynyl,
or a salt thereof.

6. Soil-applied CR granules as claimed in any one of claims 1-5, comprising an active ingredient from the group of the systemically acting strobilurins, the azoles or the salicylates.

7. Soil-applied CR granules as claimed in any of claims 1-5, comprising, as active ingredient, S-methyl benzo[1,2,3]thiadiazole-7-carbothioate.

8. Soil-applied CR granules as claimed in claim 1, comprising, as carrier, water-soluble, water-insoluble or biodegradable granules.

9. A process for the preparation of Soil-applied CR granules as claimed in any one of claims 1-8, which comprises applying, to a carrier, first the active ingredient and then the coating comprising at least one coating polymer and, if appropriate additives in a fluidized bed with a heat input of 6000 to 25,000 kJ/kg of coating polymer, micropores being generated in the coating by abrasion or by the directed addition of water-soluble additives.

10. A method for controlling phytopathogenic fungi, undesired vegetation, undesired attack by insects and/or for regulating the growth of plants, which comprises allowing Soil-applied CR granules as claimed in any one of claims 1 to 9 to act on plants, their environment or on seed.

11. The use of the soil-applied CR granules as claimed in any one of claims 1-8 or obtained as claimed in claims 9 and 10 for controlling phytopathogenic fungi, undesired vegetation, undesired attack by insects and/or for regulating the growth of plants.

## Revendications

1. Granulats pour le sol, à libération contrôlée de la matière active (CR), que l'on peut obtenir en déposant une enveloppe contenant une matière active sur un support solide en lit fluidisé avec un apport de chaleur réglable de façon définie entre 6000 et 25 000 kJ/kg de fraction polymère de l'enveloppe, l'enveloppe contenant au moins un polymère d'enveloppe choisi parmi les copolymères acrylate de butyle-styrène, les dispersions de copolymères d'esters de l'acide acrylique et de l'acide méthacrylique, les émulsions de cire de polyéthylène, les unités de polyester constituées de 50% molaire de téréphtalate de diméthyle + environ 50% molaire d'acide adipique + 150% molaire de 1,4-butanediol et un sel de zinc de l'acide éthylène-méthacrylique.

2. Granulats CR pour le sol selon la revendication 1, comprenant une enveloppe contenant une matière active constituée de
0,1 - 25% en poids d'une ou plusieurs matières actives,
1 - 40% en poids d'un ou plusieurs polymères d'enveloppe,
0 - 60% en poids d'un ou plusieurs additifs,
la somme des pourcentages pondéraux des composés dans l'enveloppe étant égale à 100% en poids.

3. Granulats CR pour le sol selon la revendication 1 ou 2, que l'on peut obtenir en déposant une dispersion aqueuse de cire de polyéthylène contenant, par rapport à la dispersion aqueuse de cire, de 5 à 40% en poids d'une cire de copolymère d'éthylène, constituée de 10 à 25% en poids d'un acide mono- ou dicarboxylique oléfiniquement insaturé en α, comportant de 3 à 8 atomes de carbone, et de 90 à 75% en poids d'éthylène ayant une valeur MFI, mesurée à 190°C et sous une charge de 2,16 kp, de 1 à 600 ou une valeur MFI, mesurée à 160°C et 325 p, de 1 à 600, de 0,1 à 5% en poids d'hydroxyde de métal alcalin, d'ammoniac, d'une alcanolamine ou d'une dialcanolamine ou leurs mélanges, et, comme reste, de l'eau jusqu'à 100% en poids.

4. Granulats CR pour le sol selon la revendication 1 contenant comme polymère d'enveloppe au moins un polyester du groupe de ceux qui sont biodégradables.

5. Granulats CR pour le sol selon la revendication 1 contenant comme matière active au moins un composé fongicide de formule I de la classe des strobilurines 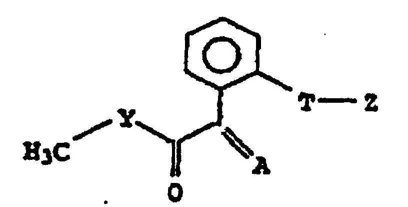 dans laquelle les substituants ont la composition suivante :
A NOCH₃, CHOCH₃, CHCH₃ ;
Y O, NH,
T oxygène ou oxyméthylène,
Z un groupe X, N=C(R¹)W ou N=C(R¹)-C(R²)=NOR³,
X hétérocyclyle éventuellement substitué, aryle éventuellement substitué, hétérotaryle éventuellement substitué ;
W alkyle éventuellement substitué, alcényle éventuellement substitué, alcynyle éventuellement substitué, cycloalkyle éventuellement substitué, cycloalcényle éventuellement substitué, hétérocyclyle éventuellement substitué, aryle éventuellement substitué ou hétéroaryle éventuellement substitué ;
R¹ hydrogène, cyano, alkyle en C₁ à C₄, halogénalkyle en C₁ à C₄, alcoxy en C₁ à C₄, (alcoxy en C₁ à C₄)-(alkyle en C₁ à C₄), cycloalkyle en C₃ à C₆ ;
R² hydrogène, cyano, halogène, C(R^{d})=NOR³ ou W, OW, SW ou NR^{c}W, où
R^{c} hydrogène, alkyle, alcényle ou alcynyle ;
R^{d} hydrogène ou alkyle ;
R³ hydrogène, alkyle éventuellement substitué, alcényle éventuellement substitué ou alcynyle éventuellement substitué,
ainsi que leurs sels.

6. Granulats CR pour le sol selon l'une des revendications 1 à 5, contenant une matière active du groupe des strobilurines à activité systémique, des azoles ou des salicylates.

7. Granulats CR pour le sol selon l'une des revendications 1 à 5, contenant comme matière active le S-méthyl-thioester de l'acide 1,2,3-benzthiadiazol-7-carboxylique.

8. Granulats CR pour le sol selon la revendication 1, contenant comme support un granulat soluble dans l'eau, insoluble dans l'eau ou biodégradable.

9. Procédé de fabrication de granulats CR pour le sol selon l'une des revendications 1 à 8, **caractérisé en ce qu'**on dépose sur un support tout d'abord la matière active, puis l'enveloppe contenant au moins un polymère d'enveloppe et le cas échéant des additifs en un lit fluidisé avec un apport de chaleur de 6000 à 25 000 kJ/kg de fraction de polymère d'enveloppe, où l'on produit des micropores dans l'enveloppe par usure ou par addition ciblée d'aditifs solubles dans l'eau.

10. Procédé de lutte contre les champignons phytopathogènes, la croissance végétale indésirable, une attaque indésirable par des insectes et/ou de régulation de la croissance des plantes, **caractérisé en ce qu'**on laisse agir un granulat CR pour le sol selon l'une des revendications 1 à 9 sur les plantes, leur habitat ou sur les semences.

11. Utilisation des granulats CR pour le sol selon l'une des revendications 1 à 8 ou tel qu'obtenus selon les revendications 9 et 10 pour combattre les champignons phytopathogènes, la croissance végétale indésirable, une attaque indésirable par des insectes et/ou pour la régulation de la croissance des plantes.
